(19) Europäisches Patentamt
European Patent Office
Office européen des brevets

(11) **EP 4 432 007 A1**

(12) **EUROPEAN PATENT APPLICATION**

(43) Date of publication:
**18.09.2024  Bulletin 2024/38**

(21) Application number: **23161377.9**

(22) Date of filing: **13.03.2023**

(51) International Patent Classification (IPC):
*G02F 1/35* (2006.01)       *G02F 1/365* (2006.01)

(52) Cooperative Patent Classification (CPC):
**G02F 1/365; G02F 1/3528**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **ASML Netherlands B.V.**
**5500 AH Veldhoven (NL)**

(72) Inventors:
• **KOHLER, Carsten, Andreas**
**5500 AH Veldhoven (NL)**
• **UEBEL, Patrick, Sebastian**
**5500 AH Veldhoven (NL)**

(74) Representative: **ASML Netherlands B.V.**
**Corporate Intellectual Property**
**P.O. Box 324**
**5500 AH Veldhoven (NL)**

(54) **HOLLOW-CORE OPTICAL FIBER BASED RADIATION SOURCE**

(57)     A broadband radiation device comprising a HC-PCF comprising: a hollow core extending along the length of the HC-PCF for confining in use a working medium under a pressure, an input end operable to receive a pulsed pump radiation; and an output end operable to emit a broadband output radiation resulting from spectral broadening of said pulsed pump radiation within the working medium confined within the HC-PCF; wherein the HC-PCF is divided into a first section and a second section; wherein the first section comprises the input end and at least part of the first section comprises a bend and/or one or more coils, and the second section comprises the output end and is substantially straight; and wherein said spectral broadening is dominated by a self-phase modulation process and a different nonlinear optical process within the first section and the second section, respectively.

Fig. 14(a)
Fig. 14(b)
Fig. 14(c)
Fig. 14(d)
Fig. 14(e)

## Description

FIELD

The present invention relates to a hollow-core optical fiber based broadband radiation source, and in particular such a broadband radiation source in relation to metrology applications in the manufacture of integrated circuits.

BACKGROUND

A lithographic apparatus is a machine constructed to apply a desired pattern onto a substrate. A lithographic apparatus can be used, for example, in the manufacture of integrated circuits (ICs). A lithographic apparatus may, for example, project a pattern (also often referred to as "design layout" or "design") at a patterning device (e.g., a mask) onto a layer of radiation-sensitive material (resist) provided on a substrate (e.g., a wafer).

To project a pattern on a substrate a lithographic apparatus may use electromagnetic radiation. The wavelength of this radiation determines the minimum size of features which can be formed on the substrate. Typical wavelengths currently in use are 365 nm (i-line), 248 nm, 193 nm and 13.5 nm. A lithographic apparatus, which uses extreme ultraviolet (EUV) radiation, having a wavelength within the range 4-20 nm, for example 6.7 nm or 13.5 nm, may be used to form smaller features on a substrate than a lithographic apparatus which uses, for example, radiation with a wavelength of 193 nm.

Low-ki lithography may be used to process features with dimensions smaller than the classical resolution limit of a lithographic apparatus. In such process, the resolution formula may be expressed as $CD = k_1 \times \lambda / NA$, where $\lambda$ is the wavelength of radiation employed, NA is the numerical aperture of the projection optics in the lithographic apparatus, CD is the "critical dimension" (generally the smallest feature size printed, but in this case half-pitch) and ki is an empirical resolution factor. In general, the smaller ki the more difficult it becomes to reproduce the pattern on the substrate that resembles the shape and dimensions planned by a circuit designer in order to achieve particular electrical functionality and performance. To overcome these difficulties, sophisticated fine-tuning steps may be applied to the lithographic projection apparatus and/or design layout. These include, for example, but not limited to, optimization of NA, customized illumination schemes, use of phase shifting patterning devices, various optimization of the design layout such as optical proximity correction (OPC, sometimes also referred to as "optical and process correction") in the design layout, or other methods generally defined as "resolution enhancement techniques" (RET). Alternatively, tight control loops for controlling a stability of the lithographic apparatus may be used to improve reproduction of the pattern at low k1.

Metrology tools are used in many aspects of the IC manufacturing process, for example as alignment tools for proper positioning of a substrate prior to an exposure, leveling tools to measure a surface topology of the substrate, for e.g., focus control and scatterometry based tools for inspecting/measuring the exposed and/or etched product in process control. In each case, a radiation source is required. For various reasons, including measurement robustness and accuracy, broadband or white light radiation sources are increasingly used for such metrology applications. It would be desirable to improve on present devices for broadband radiation generation.

SUMMARY

In a first aspect of the invention there is provided a broadband radiation device comprising a hollow-core photonic crystal fiber HC-PCF comprising: a hollow core extending along the length of the HC-PCF for confining in use a working medium under a pressure, an input end operable to receive a pulsed pump radiation; and an output end operable to emit a broadband output radiation resulting from spectral broadening of said pulsed pump radiation within the working medium confined within the HC-PCF; wherein the HC-PCF is divided into a first section extending over a first portion of said length of the HC-PCF, and a second section extending over a second portion of said length of the HC-PCF, wherein the first section comprises the input end and at least part of the first section comprises a bend and/or one or more coils, and the second section comprises the output end and is substantially straight; and wherein the HC-PCF is configured such that, within the first section, said spectral broadening occurs predominately via a self-phase modulation process and within the second section, said spectral broadening occurs predominately via a nonlinear optical process different from a self-phase modulation process.

In a second aspect of the invention there is provided a method for producing broadband output radiation, comprising: receiving a pulsed pump radiation at an input end of a hollow-core photonic crystal fiber HC-PCF having a hollow core confining a working medium under a pressure; and emitting a broadband output radiation at an output end of the HC-PCF, said broadband output radiation resulting from spectral broadening of said pulsed pump radiation within the working medium confined within the HC-PCF; wherein the HC-PCF is divided into a first section extending over a first portion of said length of the HC-PCF, and a second section extending over a second portion of said length of the HC-PCF, wherein the first section comprises the input end and at least part of the first section comprises a bend and/or one or more coils, and the second section comprises the output end and is substantially straight; and wherein the HC-PCF is configured such that, within the first section, said spectral broadening occurs predominately via a self-phase modulation process and within the second section, said spectral broadening occurs predominately via a nonlinear optical process different from a self-phase modulation process.

Other aspects of the invention comprise metrology device comprising the broadband radiation device of the first aspect.

BRIEF DESCRIPTION OF THE DRAWINGS

Embodiments of the invention will now be described, by way of example only, with reference to the accompanying schematic drawings, in which:

- Figure 1 depicts a schematic overview of a lithographic apparatus;
- Figure 2 depicts a schematic overview of a lithographic system comprising an EUV radiation source and an EUV lithographic apparatus or scanner;
- Figure 3 depicts a schematic overview of a lithographic cell;
- Figure 4 depicts a schematic representation of holistic lithography, representing a cooperation between three key technologies to optimize semiconductor manufacturing;
- Figure 5 depicts a schematic overview of a scatterometry apparatus used as a metrology device, which may comprise a radiation source according to embodiments of the invention;
- Figure 6 depicts a schematic overview of a level sensor apparatus which may comprise a radiation source according to embodiments of the invention;
- Figure 7 depicts a schematic overview of an alignment sensor apparatus which may comprise a radiation source according to embodiments of the invention;
- Figure 8 is a schematic cross sectional view of a hollow core optical fiber that may form part of a radiation source according to an embodiment in a transverse plane (i.e. perpendicular to an axis of the optical fiber);
- Figure 9 depicts a schematic representation of a radiation source according to an embodiment for providing broadband output radiation;
- Figures 10(a) and 10(b) schematically depict the transverse cross-sections of examples of hollow core photonic crystal fiber (HC-PCF) designs for supercontinuum generation;
- Figure 11(a) shows a wavelength $\lambda$ plot against normalized position NP along the fiber length for a simulation, describing the modulational instability based spectral evolution of a pulse of the input radiation within the HC-PCF of the radiation source, e.g., as shown in Figure 9;

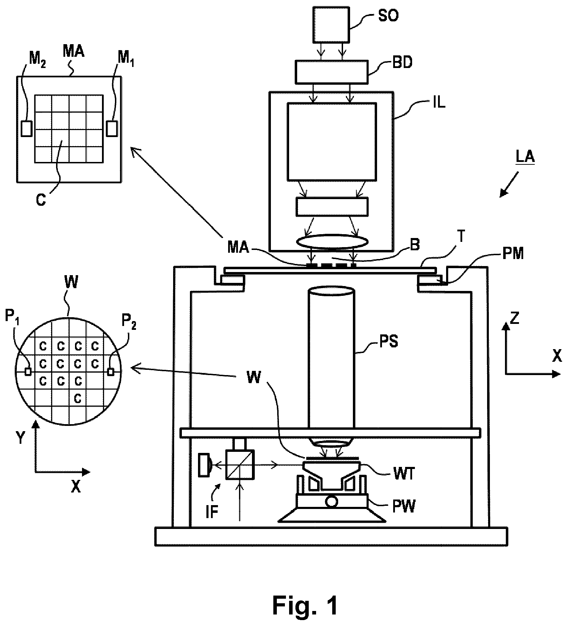

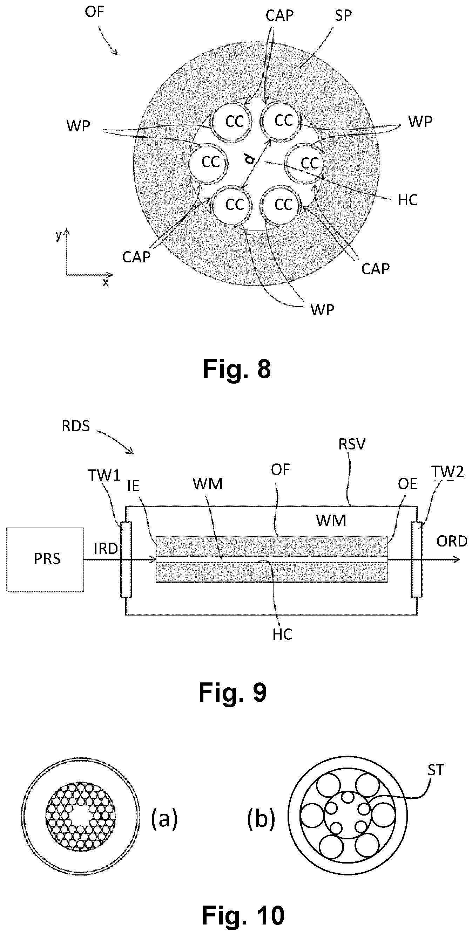

- Figure 1 1(b) shows a wavelength $\lambda$ plot against normalized position NP along the fiber length for a simulation, describing the soliton self-compression based spectral evolution of a pulse of the input radiation within the HC-PCF of the radiation source, e.g., as shown in Figure 9;

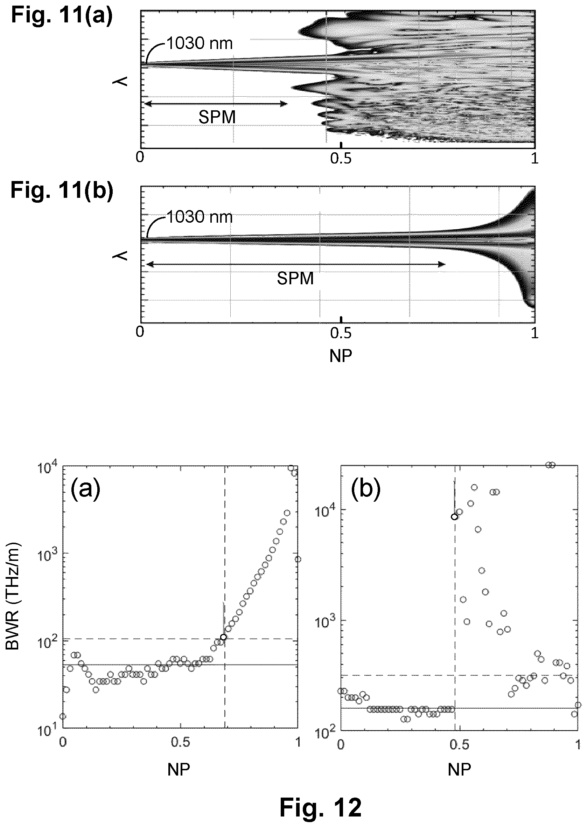

- Figure 12(a) shows a rate of bandwidth expansion/increase BWR plot against normalized position NP along the fiber length for a simulation, describing how the rate, at which the spectral bandwidth of a pulse of the input radiation increases, varies due to soliton self-compression while the pulse propagates along the HC-PCF of the radiation source, e.g., as shown in Figure 9;
- Figure 12(b) shows a rate of bandwidth expansion/increase BWR plot against normalized position NP along the fiber length for a simulation, describing how the rate, at which the spectral bandwidth of a pulse of the input radiation increases, varies due to modulation instability while the pulse propagates along the HC-PCF of the radiation source, e.g., as shown in Figure 9;

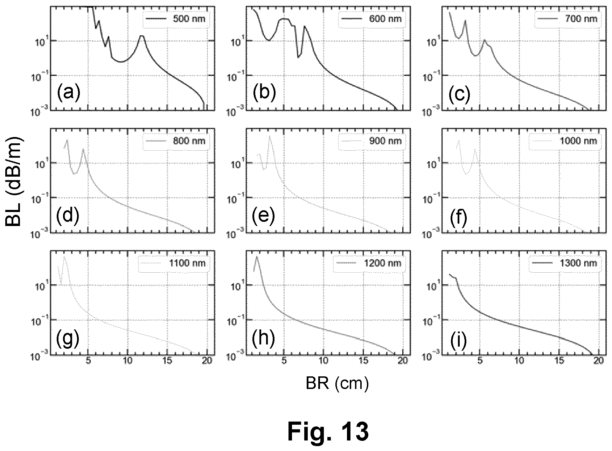

- Figures 13(a)-13(i) show a group of different simulation plots, wherein each plot illustrates numerically simulated bend loss BL as a function of bend radius BR of a HC-PCF (e.g., as shown in Figure 8) for a different wavelength;

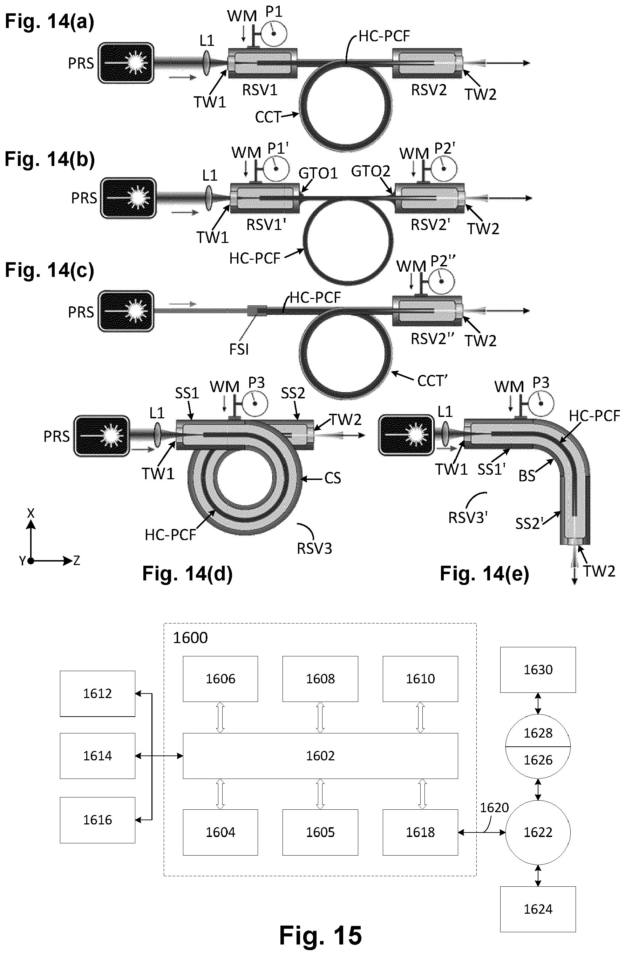

- Figures 14(a)-14(e) depict schematically five embodiments of a broadband radiation source RDS wherein at least part of an initial or first section of the HC-PCF is bent or coiled and the HC-PCF is at least partially enclosed in one or more gas cells that are configured differently for different embodiments; and
- Figure 15 depicts a block diagram of a computer system for controlling a broadband radiation source.

DETAILED DESCRIPTION

In the present document, the terms "radiation" and "beam" are used to encompass all types of electromagnetic radiation, including ultraviolet radiation (e.g. with a wavelength of 365, 248, 193, 157 or 126 nm) and EUV (extreme ultra-violet radiation, e.g. having a wavelength in the range of about 5-100 nm).

The term "reticle", "mask" or "patterning device" as employed in this text may be broadly interpreted as referring to a generic patterning device that can be used to endow an incoming radiation beam with a patterned cross-section, corresponding to a pattern that is to be created in a target portion of the substrate. The term "light valve" can also be used in this context. Besides the classic mask (transmissive or reflective, binary, phase-shifting, hybrid, etc.), examples of other such patterning devices include a programmable mirror array and a programmable LCD array.

Figure 1 schematically depicts a lithographic apparatus LA. The lithographic apparatus LA includes an illumination system (also referred to as illuminator) IL configured to condition a radiation beam B (e.g., UV radiation, DUV radiation or EUV radiation), a mask support (e.g., a mask table) MT constructed to support a patterning device (e.g., a mask) MA and connected to a first positioner PM configured to accurately position the patterning device MA in accordance with certain parameters, a substrate support (e.g., a wafer table) WT constructed to hold a substrate (e.g., a resist coated wafer) W and connected to a second positioner PW configured to accurately position the substrate support in accordance with certain parameters, and a projection system (e.g., a refractive projection lens system) PS configured to project a pattern imparted to the radiation beam B by patterning device MA onto a target portion C (e.g., comprising one or more dies) of the substrate W.

In operation, the illumination system IL receives a radiation beam from a radiation source SO, e.g. via a beam delivery system BD. The illumination system IL may include various types of optical components, such as refractive, reflective, magnetic, electromagnetic, electrostatic, and/or other types of optical components, or any combination thereof, for directing, shaping, and/or controlling radiation. The illuminator IL may be used to condition the radiation beam B to have a desired spatial and angular intensity distribution in its cross section at a plane of the patterning device MA.

The term "projection system" PS used herein should be broadly interpreted as encompassing various types of projection system, including refractive, reflective, catadioptric, anamorphic, magnetic, electromagnetic and/or electrostatic optical systems, or any combination thereof, as appropriate for the exposure radiation being used, and/or for other factors such as the use of an immersion liquid or the use of a vacuum. Any use of the term "projection lens" herein may be considered as synonymous with the more general term "projection system" PS.

The lithographic apparatus LA may be of a type wherein at least a portion of the substrate may be covered by a liquid having a relatively high refractive index, e.g., water, so as to fill a space between the projection system PS and the substrate W - which is also referred to as immersion lithography. More information on immersion techniques is given in US6952253, which is incorporated herein by reference.

The lithographic apparatus LA may also be of a type having two or more substrate supports WT (also named "dual stage"). In such "multiple stage" machine, the substrate supports WT may be used in parallel, and/or steps in preparation of a subsequent exposure of the substrate W may be carried out on the substrate W located on one of the substrate support WT while another substrate W on the other substrate support WT is being used for exposing a pattern on the other substrate W.

In addition to the substrate support WT, the lithographic apparatus LA may comprise a measurement stage. The measurement stage is arranged to hold a sensor and/or a cleaning device. The sensor may be arranged to measure a property of the projection system PS or a property of the radiation beam B. The measurement stage may hold multiple sensors. The cleaning device may be arranged to clean part of the lithographic apparatus, for example a part of the projection system PS or a part of a system that provides the immersion liquid. The measurement stage may move beneath the projection system PS when the substrate support WT is away from the projection system PS.

In operation, the radiation beam B is incident on the patterning device, e.g. mask, MA which is held on the mask support MT, and is patterned by the pattern (design layout) present on patterning device MA. Having traversed the mask MA, the radiation beam B passes through the projection system PS, which focuses the beam onto a target portion C of the substrate W. With the aid of the second positioner PW and a position measurement system IF, the substrate support WT can be moved accurately, e.g., so as to position different target portions C in the path of the radiation beam B at a focused and aligned position. Similarly, the first positioner PM and possibly another position sensor (which is not explicitly depicted in Figure 1) may be used to accurately position the patterning device MA with respect to the path of the radiation beam B. Patterning device MA and substrate W may be aligned using mask alignment marks M1, M2 and substrate alignment marks P1, P2. Although the substrate alignment marks P1, P2 as illustrated occupy dedicated target portions, they may be located in spaces between target portions. Substrate alignment marks P1, P2 are known as scribe-lane alignment marks when these are located between the target portions C.

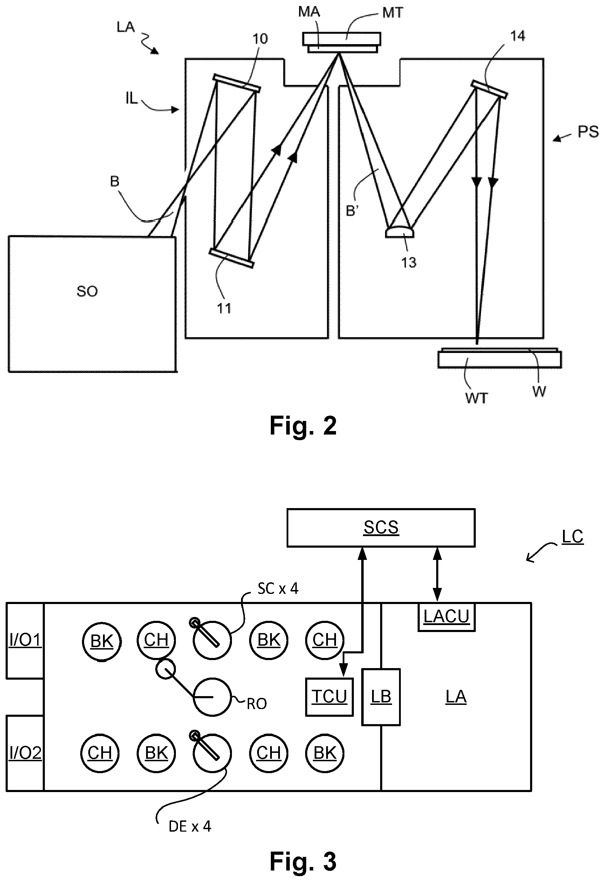

Figure 2 shows a lithographic system comprising a radiation source SO and a lithographic apparatus LA. The radiation source SO is configured to generate an EUV radiation beam B and to supply the EUV radiation beam B to the lithographic apparatus LA. The lithographic apparatus LA comprises an illumination system IL, a support structure MT configured to support a patterning device MA (e.g., a mask), a projection system PS and a substrate table WT configured to support a substrate W.

The illumination system IL is configured to condition the EUV radiation beam B before the EUV radiation beam B is incident upon the patterning device MA. Thereto, the illumination system IL may include a facetted field mirror device 10 and a facetted pupil mirror device 11. The faceted field mirror device 10 and faceted pupil mirror device 11 together provide the EUV radiation beam B with a desired cross-sectional shape and a desired intensity distribution. The illumination system IL may include other mirrors or devices in addition to, or instead of, the faceted field mirror device 10 and faceted pupil mirror device 11.

After being thus conditioned, the EUV radiation beam B interacts with the patterning device MA. As a result of this interaction, a patterned EUV radiation beam B' is generated. The projection system PS is configured to project the patterned EUV radiation beam B' onto the substrate W. For that purpose, the projection system PS may comprise a plurality of mirrors 13,14 which are configured to project the patterned EUV radiation beam B' onto the substrate W held by the substrate table WT. The projection system PS may apply a reduction factor to the patterned EUV radiation beam B', thus forming an image with features that are smaller than corresponding features on the patterning device MA. For example, a reduction factor of 4 or 8 may be applied. Although the projection system PS is illustrated as having only two mirrors 13,14 in Figure 2, the projection system PS may include a different number of mirrors (e.g. six or eight mirrors).

The substrate W may include previously formed patterns. Where this is the case, the lithographic apparatus LA aligns the image, formed by the patterned EUV radiation beam B', with a pattern previously formed on the substrate W.

A relative vacuum, i.e. a small amount of gas (e.g. hydrogen) at a pressure well below atmospheric pressure, may be provided in the radiation source SO, in the illumination system IL, and/or in the projection system PS.

The radiation source SO may be a laser produced plasma (LPP) source, a discharge produced plasma (DPP) source, a free electron laser (FEL) or any other radiation source that is capable of generating EUV radiation.

As shown in Figure 3 the lithographic apparatus LA may form part of a lithographic cell LC, also sometimes referred to as a lithocell or (litho)cluster, which often also includes apparatus to perform pre- and post-exposure processes on a substrate W. Conventionally these include spin coaters SC to deposit resist layers, developers DE to develop exposed resist, chill plates CH and bake plates BK, e.g. for conditioning the temperature of substrates W e.g. for conditioning solvents in the resist layers. A substrate handler, or robot, RO picks up substrates W from input/output ports I/O1, I/O2, moves them between the different process apparatus and delivers the substrates W to the loading bay LB of the lithographic apparatus LA. The devices in the lithocell, which are often also collectively referred to as the track, are typically under the control of a track control unit TCU that in itself may be controlled by a supervisory control system SCS, which may also control the lithographic apparatus LA, e.g. via lithography control unit LACU.

In order for the substrates W exposed by the lithographic apparatus LA to be exposed correctly and consistently, it is desirable to inspect substrates to measure properties of patterned structures, such as overlay errors between subsequent layers, line thicknesses, critical dimensions (CD), etc. For this purpose, inspection tools (not shown) may be included in the lithocell LC. If errors are detected, adjustments, for example, may be made to exposures of subsequent substrates or to other processing steps that are to be performed on the substrates W, especially if the inspection is done before other substrates W of the same batch or lot are still to be exposed or processed.

An inspection apparatus, which may also be referred to as a metrology apparatus, is used to determine properties of the substrates W, and in particular, how properties of different substrates W vary or how properties associated with different layers of the same substrate W vary from layer to layer. The inspection apparatus may alternatively be constructed to identify defects on the substrate W and may, for example, be part of the lithocell LC, or may be integrated into the lithographic apparatus LA, or may even be a stand-alone device. The inspection apparatus may measure the properties on a latent image (image in a resist layer after the exposure), or on a semi-latent image (image in a resist layer after a post-exposure bake step PEB), or on a developed resist image (in which the exposed or unexposed parts of the resist have been removed), or even on an etched image (after a pattern transfer step such as etching).

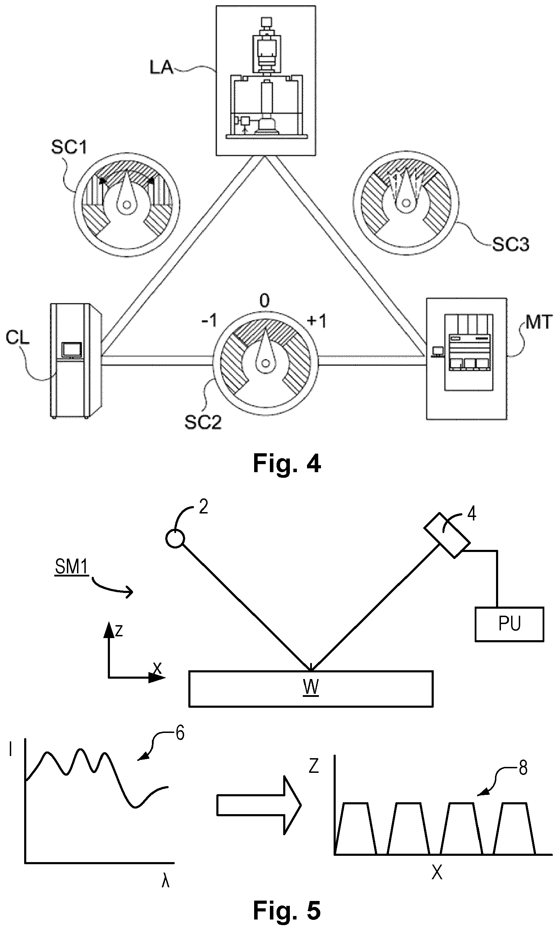

Typically the patterning process in a lithographic apparatus LA is one of the most critical steps in the processing which requires high accuracy of dimensioning and placement of structures on the substrate W. To ensure this high accuracy, three systems may be combined in a so called "holistic" control environment as schematically depicted in Figure 4. One of these systems is the lithographic apparatus LA which is (virtually) connected to a metrology tool MT (a second system) and to a computer system CL (a third system). The key of such "holistic" environment is to optimize the cooperation between these three systems to enhance the overall process window and provide tight control loops to ensure that the patterning performed by the lithographic apparatus LA stays within a process window. The process window defines a range of process parameters (e.g. dose, focus, overlay) within which a specific manufacturing process yields a defined result (e.g. a functional semiconductor device) - typically within which the process parameters in the lithographic process or patterning process are allowed to vary.

The computer system CL may use (part of) the design layout to be patterned to predict which resolution enhancement techniques to use and to perform computational lithography simulations and calculations to determine which mask layout and lithographic apparatus settings achieve the largest overall process window of the patterning process (depicted in Figure 4 by the double arrow in the first scale SC1). Typically, the resolution enhancement techniques are arranged to match the patterning possibilities of the lithographic apparatus LA. The computer system CL may also be used to detect where within the process window the lithographic apparatus LA is currently operating (e.g. using input from the metrology tool MT) to predict whether defects may be present due to e.g. sub-optimal processing (depicted in Figure 4 by the arrow pointing "0" in the second scale SC2).

The metrology tool MT may provide input to the computer system CL to enable accurate simulations and predictions, and may provide feedback to the lithographic apparatus LA to identify possible drifts, e.g. in a calibration status of the lithographic apparatus LA (depicted in Figure 4 by the multiple arrows in the third scale SC3).

In lithographic processes, it is desirable to make frequently measurements of the structures created, e.g., for process control and verification. Tools to make such measurement are typically called metrology tools MT. Different types of metrology tools MT for making such measurements are known, including scanning electron microscopes or various forms of scatterometer metrology tools MT. Scatterometers are versatile instruments which allow measurements of the parameters of a lithographic process by having a sensor in the pupil or a conjugate plane with the pupil of the objective of the scatterometer, measurements usually referred as pupil based measurements, or by having the sensor in the image plane or a plane conjugate with the image plane, in which case the measurements are usually referred as image or field based measurements. Such scatterometers and the associated measurement techniques are further described in patent applications US20100328655, US2011102753A1, US20120044470A, US20110249244, US20110026032 or EP1,628,164A, incorporated herein by reference in their entirety. Aforementioned scatterometers may measure gratings using light from soft x-ray and visible to near-IR wavelength range.

In a first embodiment, the scatterometer MT is an angular resolved scatterometer. In such a scatterometer reconstruction methods may be applied to the measured signal to reconstruct or calculate properties of the grating. Such reconstruction may, for example, result from simulating interaction of scattered radiation with a mathematical model of the target structure and comparing the simulation results with those of a measurement. Parameters of the mathematical model are adjusted until the simulated interaction produces a diffraction pattern similar to that observed from the real target.

In a second embodiment, the scatterometer MT is a spectroscopic scatterometer MT. In such spectroscopic scatterometer MT, the radiation emitted by a radiation source is directed onto the target and the reflected or scattered radiation from the target is directed to a spectrometer detector, which measures a spectrum (i.e. a measurement of intensity as a function of wavelength) of the specular reflected radiation. From this data, the structure or profile of the target giving rise to the detected spectrum may be reconstructed, e.g. by Rigorous Coupled Wave Analysis and non-linear regression or by comparison with a library of simulated spectra.

In a third embodiment, the scatterometer MT is an ellipsometric scatterometer. The ellipsometric scatterometer allows for determining parameters of a lithographic process by measuring scattered radiation for each polarization states. Such metrology apparatus emits polarized light (such as linear, circular, or elliptic) by using, for example, appropriate polarization filters in the illumination section of the metrology apparatus. A source suitable for the metrology apparatus may provide polarized radiation as well. Various embodiments of existing ellipsometric scatterometers are described in US patent applications 11/451,599, 11/708,678, 12/256,780, 12/486,449, 12/920,968, 12/922,587, 13/000,229, 13/033,135, 13/533,110 and 13/891,410 incorporated herein by reference in their entirety.

In one embodiment of the scatterometer MT, the scatterometer MT is adapted to measure the overlay of two misaligned gratings or periodic structures by measuring asymmetry in the reflected spectrum and/or the detection configuration, the asymmetry being related to the extent of the overlay. The two (typically overlapping) grating structures may be applied in two different layers (not necessarily consecutive layers), and may be formed substantially at the same position on the wafer. The scatterometer may have a symmetrical detection configuration as described e.g. in co-owned patent application EP1,628,164A, such that any asymmetry is clearly distinguishable. This provides a straightforward way to measure misalignment in gratings. Further examples for measuring overlay error between the two layers containing periodic structures as target is measured through asymmetry of the periodic structures may be found in PCT patent application publication no. WO 2011/012624 or US patent application US 20160161863, incorporated herein by reference in its entirety.

Other parameters of interest may be focus and dose. Focus and dose may be determined simultaneously by scatterometry (or alternatively by scanning electron microscopy) as described in US patent application US2011-0249244, incorporated herein by reference in its entirety. A single structure may be used which has a unique combination of critical dimension and sidewall angle measurements for each point in a focus energy matrix (FEM - also referred to as Focus Exposure Matrix). If these unique combinations of critical dimension and sidewall angle are available, the focus and dose values may be uniquely determined from these measurements.

A metrology target may be an ensemble of composite gratings, formed by a lithographic process, mostly in resist, but also after etch process for example. Typically the pitch and line-width of the structures in the gratings strongly depend on the measurement optics (in particular the NA of the optics) to be able to capture diffraction orders coming from the metrology targets. As indicated earlier, the diffracted signal may be used to determine shifts between two layers (also referred to 'overlay') or may be used to reconstruct at least part of the original grating as produced by the lithographic process. This reconstruction may be used to provide guidance of the quality of the lithographic process and may be used to control at least part of the lithographic process. Targets may have smaller sub-segmentation which are configured to mimic dimensions of the functional part of the design layout in a target. Due to this sub-segmentation, the targets will behave more similar to the functional part of the design layout such that the overall process parameter measurements resembles the functional part of the design layout better. The targets may be measured in an underfilled mode or in an overfilled mode. In the underfilled mode, the measurement beam generates a spot that is smaller than the overall target.

In the overfilled mode, the measurement beam generates a spot that is larger than the overall target. In such overfilled mode, it may also be possible to measure different targets simultaneously, thus determining different processing parameters at the same time.

Overall measurement quality of a lithographic parameter using a specific target is at least partially determined by the measurement recipe used to measure this lithographic parameter. The term "substrate measurement recipe" may include one or more parameters of the measurement itself, one or more parameters of the one or more patterns measured, or both. For example, if the measurement used in a substrate measurement recipe is a diffraction-based optical measurement, one or more of the parameters of the measurement may include the wavelength of the radiation, the polarization of the radiation, the incident angle of radiation relative to the substrate, the orientation of radiation relative to a pattern on the substrate, etc. One of the criteria to select a measurement recipe may, for example, be a sensitivity of one of the measurement parameters to processing variations. More examples are described in US patent application US2016-0161863 and published US patent application US 2016/0370717A1incorporated herein by reference in its entirety.

A metrology apparatus, such as a scatterometer, is depicted in Figure 5. It comprises a broadband (white light) radiation projector 2 which projects radiation onto a substrate W. The reflected or scattered radiation is passed to a spectrometer detector 4, which measures a spectrum 6 (i.e. a measurement of intensity as a function of wavelength) of the specular reflected radiation. From this data, the structure or profile 8 giving rise to the detected spectrum may be reconstructed by processing unit PU, e.g. by Rigorous Coupled Wave Analysis and non-linear regression or by comparison with a library of simulated spectra as shown at the bottom of Figure 5. In general, for the reconstruction, the general form of the structure is known and some parameters are assumed from knowledge of the process by which the structure was made, leaving only a few parameters of the structure to be determined from the scatterometry data. Such a scatterometer may be configured as a normal-incidence scatterometer or an oblique-incidence scatterometer.

Overall measurement quality of a lithographic parameter via measurement of a metrology target is at least partially determined by the measurement recipe used to measure this lithographic parameter. The term "substrate measurement recipe" may include one or more parameters of the measurement itself, one or more parameters of the one or more patterns measured, or both. For example, if the measurement used in a substrate measurement recipe is a diffraction-based optical measurement, one or more of the parameters of the measurement may include the wavelength of the radiation, the polarization of the radiation, the incident angle of radiation relative to the substrate, the orientation of radiation relative to a pattern on the substrate, etc. One of the criteria to select a measurement recipe may, for example, be a sensitivity of one of the measurement parameters to processing variations. More examples are described in US patent application US2016/0161863 and published US patent application US 2016/0370717A1incorporated herein by reference in its entirety.

Another type of metrology tool used in IC manufacture is a topography measurement system, level sensor or height sensor. Such a tool may be integrated in the lithographic apparatus, for measuring a topography of a top surface of a substrate (or wafer). A map of the topography of the substrate, also referred to as height map, may be generated from these measurements indicating a height of the substrate as a function of the position on the substrate. This height map may subsequently be used to correct the position of the substrate during transfer of the pattern on the substrate, in order to provide an aerial image of the patterning device in a properly focus position on the substrate. It will be understood that "height" in this context refers to a dimension broadly out of the plane to the substrate (also referred to as Z-axis). Typically, the level or height sensor performs measurements at a fixed location (relative to its own optical system) and a relative movement between the substrate and the optical system of the level or height sensor results in height measurements at locations across the substrate.

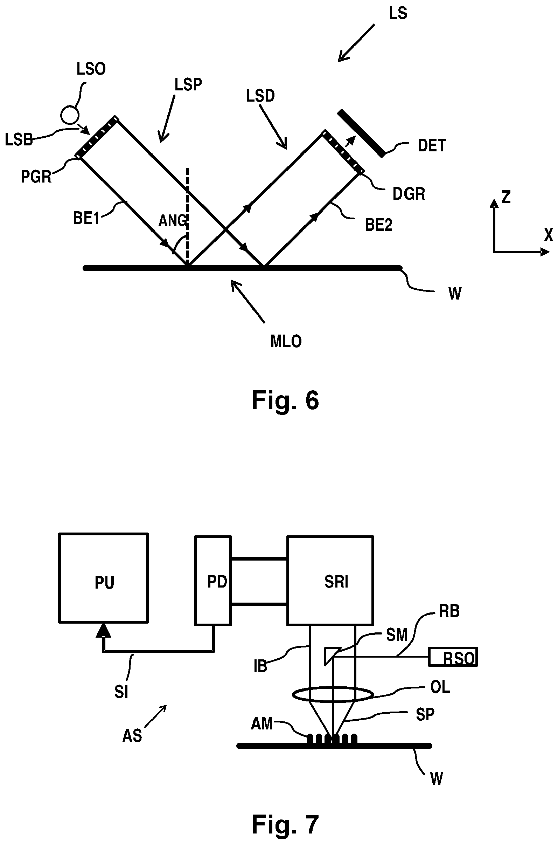

An example of a level or height sensor LS as known in the art is schematically shown in Figure 6, which illustrates only the principles of operation. In this example, the level sensor comprises an optical system, which includes a projection unit LSP and a detection unit LSD. The projection unit LSP comprises a radiation source LSO providing a beam of radiation LSB which is imparted by a projection grating PGR of the projection unit LSP. The radiation source LSO may be, for example, a narrowband or broadband light source, such as a supercontinuum light source, polarized or non-polarized, pulsed or continuous, such as a polarized or non-polarized laser beam. The radiation source LSO may include a plurality of radiation sources having different colors, or wavelength ranges, such as a plurality of LEDs. The radiation source LSO of the level sensor LS is not restricted to visible radiation, but may additionally or alternatively encompass UV and/or IR radiation and any range of wavelengths suitable to reflect from a surface of a substrate.

The projection grating PGR is a periodic grating comprising a periodic structure resulting in a beam of radiation BE1 having a periodically varying intensity. The beam of radiation BE1 with the periodically varying intensity is directed towards a measurement location MLO on a substrate W having an angle of incidence ANG with respect to an axis perpendicular (Z-axis) to the incident substrate surface between 0 degrees and 90 degrees, typically between 70 degrees and 80 degrees. At the measurement location MLO, the patterned beam of radiation BE1 is reflected by the substrate W (indicated by arrows BE2) and directed towards the detection unit LSD.

In order to determine the height level at the measurement location MLO, the level sensor further comprises a detection system comprising a detection grating DGR, a detector DET and a processing unit (not shown) for processing an output signal of the detector DET. The detection grating DGR may be identical to the projection grating PGR. The detector DET produces a detector output signal indicative of the light received, for example indicative of the intensity of the light received, such as a photodetector, or representative of a spatial distribution of the intensity received, such as a camera. The detector DET may comprise any combination of one or more detector types.

By means of triangulation techniques, the height level at the measurement location MLO can be determined. The detected height level is typically related to the signal strength as measured by the detector DET, the signal strength having a periodicity that depends, amongst others, on the design of the projection grating PGR and the (oblique) angle of incidence ANG.

The projection unit LSP and/or the detection unit LSD may include further optical elements, such as lenses and/or mirrors, along the path of the patterned beam of radiation between the projection grating PGR and the detection grating DGR (not shown).

In an embodiment, the detection grating DGR may be omitted, and the detector DET may be placed at the position where the detection grating DGR is located. Such a configuration provides a more direct detection of the image of the projection grating PGR.

In order to cover the surface of the substrate W effectively, a level sensor LS may be configured to project an array of measurement beams BE1 onto the surface of the substrate W, thereby generating an array of measurement areas MLO or spots covering a larger measurement range.

Various height sensors of a general type are disclosed for example in US7265364 and US7646471, both incorporated by reference. A height sensor using UV radiation instead of visible or infrared radiation is disclosed in US2010233600A1, incorporated by reference. In WO2016102127A1, incorporated by reference, a compact height sensor is described which uses a multi-element detector to detect and recognize the position of a grating image, without needing a detection grating.

Another type of metrology tool used in IC manufacture is an alignment sensor. A critical aspect of performance of the lithographic apparatus is therefore the ability to place the applied pattern correctly and accurately in relation to features laid down in previous layers (by the same apparatus or a different lithographic apparatus). For this purpose, the substrate is provided with one or more sets of marks or targets. Each mark is a structure whose position can be measured at a later time using a position sensor, typically an optical position sensor. The position sensor may be referred to as "alignment sensor" and marks may be referred to as "alignment marks".

A lithographic apparatus may include one or more (e.g. a plurality of) alignment sensors by which positions of alignment marks provided on a substrate can be measured accurately. Alignment (or position) sensors may use optical phenomena such as diffraction and interference to obtain position information from alignment marks formed on the substrate. An example of an alignment sensor used in current lithographic apparatus is based on a self-referencing interferometer as described in US6961116. Various enhancements and modifications of the position sensor have been developed, for example as disclosed in US2015261097A1. The contents of all of these publications are incorporated herein by reference.

Figure 7 is a schematic block diagram of an embodiment of a known alignment sensor AS, such as is described, for example, in US6961116, and which is incorporated by reference. Radiation source RSO provides a beam RB of radiation of one or more wavelengths, which is diverted by diverting optics onto a mark, such as mark AM located on substrate W, as an illumination spot SP. In this example the diverting optics comprises a spot mirror SM and an objective lens OL. The illumination spot SP, by which the mark AM is illuminated, may be slightly smaller in diameter than the width of the mark itself.

Radiation diffracted by the alignment mark AM is collimated (in this example via the objective lens OL) into an information-carrying beam IB. The term "diffracted" is intended to include zero-order diffraction from the mark (which may be referred to as reflection). A self-referencing interferometer SRI, e.g. of the type disclosed in US6961116 mentioned above, interferes the beam IB with itself after which the beam is received by a photodetector PD. Additional optics (not shown) may be included to provide separate beams in case more than one wavelength is created by the radiation source RSO. The photodetector may be a single element, or it may comprise a number of pixels, if desired. The photodetector may comprise a sensor array.

The diverting optics, which in this example comprises the spot mirror SM, may also serve to block zero order radiation reflected from the mark, so that the information-carrying beam IB comprises only higher order diffracted radiation from the mark AM (this is not essential to the measurement, but improves signal to noise ratios).

Intensity signals SI are supplied to a processing unit PU. By a combination of optical processing in the block SRI and computational processing in the unit PU, values for X- and Y-position on the substrate relative to a reference frame are output.

A single measurement of the type illustrated only fixes the position of the mark within a certain range corresponding to one pitch of the mark. Coarser measurement techniques are used in conjunction with this to identify which period of a sine wave is the one containing the marked position. The same process at coarser and/or finer levels may be repeated at different wavelengths for increased accuracy and/or for robust detection of the mark irrespective of the materials from which the mark is made, and materials on and/or below which the mark is provided. The wavelengths may be multiplexed and demultiplexed optically so as to be processed simultaneously, and/or they may be multiplexed by time division or frequency division.

In this example, the alignment sensor and spot SP remain stationary, while it is the substrate W that moves. The alignment sensor can thus be mounted rigidly and accurately to a reference frame, while effectively scanning the mark AM in a direction opposite to the direction of movement of substrate W. The substrate W is controlled in this movement by its mounting on a substrate support and a substrate positioning system controlling the movement of the substrate support. A substrate support position sensor (e.g. an interferometer) measures the position of the substrate support (not shown). In an embodiment, one or more (alignment) marks are provided on the substrate support. A measurement of the position of the marks provided on the substrate support allows the position of the substrate support as determined by the position sensor to be calibrated (e.g. relative to a frame to which the alignment system is connected). A measurement of the position of the alignment marks provided on the substrate allows the position of the substrate relative to the substrate support to be determined.

Metrology tools MT, such as a scatterometer, topography measurement system, or position measurement system mentioned above may use radiation originating from a radiation source to perform a measurement. The properties of the radiation used by a metrology tool may affect the type and quality of measurements that may be performed. For some applications, it may be advantageous to use multiple radiation frequencies to measure a substrate, for example broadband radiation may be used. Multiple different frequencies may be able to propagate, irradiate, and scatter off a metrology target with no or minimal interference with other frequencies. Therefore different frequencies may for example be used to obtain more metrology data simultaneously. Different radiation frequencies may also be able to interrogate and discover different properties of a metrology target. Broadband radiation may be useful in metrology systems MT such as for example level sensors, alignment mark measurement systems, scatterometry tools, or inspection tools. A broadband radiation source may be a supercontinuum source.

High quality broadband radiation, for example supercontinuum radiation, may be difficult to generate. One method for generating broadband radiation may be to broaden high-power narrow band or single frequency input radiation or pump radiation, for example making use of non-linear, higher order effects. The input radiation (which may be produced using a laser) may be referred to as pump radiation. Alternatively, the input radiation may be referred to as seed radiation. To obtain high power radiation for broadening effects, radiation may be confined into a small area so that strongly localised high intensity radiation is achieved. In those areas, the radiation may interact with broadening structures and/or materials forming a non-linear medium so as to create broadband output radiation. In the high intensity radiation areas, different materials and/or structures may be used to enable and/or improve radiation broadening by providing a suitable non-linear medium.

In some implementations, the broadband output radiation is created in a photonic crystal fiber (PCF). In several embodiments, such a photonic crystal fiber has microstructures around its fiber core assisting in confining radiation that travels through the fiber in the fiber core. The fiber core can be made of a solid material that has non-linear properties and that is capable of generating broadband radiation when high intensity pump radiation is transmitted through the fiber core. Although it is feasible to generate broadband radiation in solid core photonic crystal fibers, there may be a few disadvantages of using a solid material. For example, if UV radiation is generated in the solid core, this radiation might not be present in the output spectrum of the fiber because the radiation is absorbed by most solid material.

In some implementations, as discussed further below with reference to Figure 9, methods and apparatus for broadening input radiation may use a fiber for confining input radiation, and for broadening the input radiation to output broadband radiation. The fiber may be a hollow core fiber, and may comprise internal structures to achieve effective guiding and confinement of radiation in the fiber. The fiber may be a hollow core photonic crystal fiber (HC-PCF), which is particularly suitable for strong radiation confinement, predominantly inside the hollow core of the fiber, achieving high radiation intensities. The hollow core of the fiber may be filled with a gas acting as a broadening medium for broadening input radiation. Such a fiber and gas arrangement may be used to create a supercontinuum radiation source. Radiation input to the fiber may be electromagnetic radiation, for example radiation in one or more of the infrared, visible, UV, and extreme UV spectra. The output radiation may consist of or comprise broadband radiation, which may be referred to herein as white light.

Some embodiments relate to a new design of such a broadband radiation source comprising an optical fiber. The optical fiber is a hollow-core, photonic crystal fiber (HC-PCF). In particular, the optical fiber may be a hollow-core, photonic crystal fiber of a type comprising anti-resonant structures for confinement of radiation. Such fibers comprising anti-resonant structures are known in the art as anti-resonant fibers, tubular fibers, single-ring fibers, negative curvature fibers or inhibited coupling fibers. Various different designs of such fibers are known in the art. Alternatively, the optical fiber may be photonic bandgap fibers (HC-PBFs, for example a Kagome fiber).

A number of types of HC-PCFs can be engineered, each based on a different physical guidance mechanism. Two such HC-PCFs include: hollow-core photonic bandgap fibers (HC-PBFs) and hollow-core anti-resonant reflecting fibers (HC-ARFs). Detail on the design and manufacture of HC-PCFs can be found in US patent US2004/015085A1 (for HC-PBFs) and International PCT patent application WO2017/032454A1 (for Hollow Core anti-resonant reflecting fibers), which are incorporated herein by reference. Figure 10(a) shows a Kagome fiber, comprising a Kagome lattice structure.

An example of an optical fiber for use in the radiation source is now described with reference to Figure 8, which is a schematic cross sectional view of the optical fiber OF in a transverse plane. Further embodiments similar to the practical example of the fiber of Figure 8 are disclosed in WO2017/032454A1.

The optical fiber OF comprises an elongate body, which is longer in one dimension compared to the other two dimensions of the fiber OF. This longer dimension may be referred to as an axial direction and may define an axis of the optical fiber OF. The two other dimensions define a plane which may be referred to as a transverse plane. Figure 8 shows a cross-section of the optical fiber OF in this transverse plane (i.e. perpendicular to the axis), which is labelled as the x-y plane. The transverse cross-section of the optical fiber OF may be substantially constant along the fiber axis.

It will be appreciated that the optical fiber OF has some degree of flexibility and therefore the direction of the axis will not, in general, be uniform along the length of the optical fiber OF. The terms such as the optical axis, the transverse cross-section and the like will be understood to mean the local optical axis, the local transverse cross-section and so on. Furthermore, where components are described as being cylindrical or tubular these terms will be understood to encompass such shapes that may have been distorted as the optical fiber OF is flexed.

The optical fiber OF may have any length and it will be appreciated that the length of the optical fiber OF may be dependent on the application. The optical fiber OF may have a length between 1 cm and 10 m, for example, the optical fiber OF may have a length between 10 cm and 100 cm. In an embodiment, the optical fiber OF may be a tapered fiber which may comprise a waist section. The waist section may comprise a tapering-down section where the fiber diameter is reduced. In an embodiment, the waist section may further comprise a central region of constant diameter. In an embodiment, the waist section may further comprise a tapering-up section where the fiber diameter is increased to the original diameter. The length of the taper waist section can extend from e.g., a few millimeters to several tens of centimeters. The taper waist section with a longer length of e.g., 10s of meters, may be possible if the fiber parameters are varied during fiber drawing.

The optical fiber OF comprises: a hollow core HC; a cladding portion surrounding the hollow core HC; and a support portion SP surrounding and supporting the cladding portion. The optical fiber OF may be considered to comprise a body (comprising the cladding portion and the support portion SP) having a hollow core HC. The cladding portion comprises a plurality of anti-resonance elements for guiding radiation through the hollow core HC. In particular, the plurality of anti-resonance elements are arranged to confine radiation that propagates through the optical fiber OF predominantly inside the hollow core HC and to guide the radiation along the optical fiber OF. The hollow core HC of the optical fiber OF may be disposed substantially in a central region of the optical fiber OF, so that the axis of the optical fiber OF may also define an axis of the hollow core HC of the optical fiber OF.

The cladding portion comprises a plurality of anti-resonance elements for guiding radiation propagating through the optical fiber OF. In particular, in this embodiment, the cladding portion comprises a single ring of six tubular capillaries CAP. Each of the tubular capillaries CAP acts as an anti-resonance element.

The capillaries CAP may also be referred to as tubes. The capillaries CAP may be circular in cross section, or may have another shape. Each capillary CAP comprises a generally cylindrical wall portion WP that at least partially defines the hollow core HC of the optical fiber OF and separates the hollow core HC from a capillary cavity CC. It will be appreciated that the wall portion WP may act as an anti-reflecting Fabry-Perot resonator for radiation that propagates through the hollow core HC (and which may be incident on the wall portion WP at a grazing incidence angle). The thickness of the wall portion WP may be suitable so as to ensure that reflection back into the hollow core HC is generally enhanced whereas transmission into the capillary cavity CC is generally suppressed. In some embodiments, the capillary wall portion WP may have a thickness between 0.01 - 10.0 $\mu$m.

It will be appreciated that, as used herein, the term cladding portion is intended to mean a portion of the optical fiber OF for guiding radiation propagating through the optical fiber OF (i.e. the capillaries CAP which confine said radiation within the hollow core HC). The radiation may be confined in the form of transverse modes, propagating along the fiber axis.

The support portion is generally tubular and supports the six capillaries CAP of the cladding portion. The six capillaries CAP are distributed evenly around an inner surface if the inner support portion SP. The six capillaries CAP may be described as being disposed in a generally hexagonal formation.

The capillaries CAP are arranged so that each capillary is not in contact with any of the other capillaries CAP. Each of the capillaries CAP is in contact with the inner support portion SP and spaced apart from adjacent capillaries CAP in the ring structure. Such an arrangement may be beneficial since it may increase a transmission bandwidth of the optical fiber OF (relative, for example, to an arrangement wherein the capillaries are in contact with each other). Alternatively, in some embodiments, each of the capillaries CAP may be in contact with adjacent capillaries CAP in the ring structure.

The six capillaries CAP of the cladding portion are disposed in a ring structure around the hollow core HC. An inner surface of the ring structure of capillaries CAP at least partially defines the hollow core HC of the optical fiber OF.

The diameter d of the hollow core HC (which may be defined as the smallest dimension between opposed capillaries, indicated by arrow d) may be between 10 and 1000 $\mu$m. The diameter d of the hollow core HC may affect the mode field diameter, impact loss, dispersion, modal plurality, and non-linearity properties of the hollow core HC optical fiber OF.

In this embodiment, the cladding portion comprises a single ring arrangement of capillaries CAP (which act as anti-resonance elements). Therefore, a line in any radial direction from a center of the hollow core HC to an exterior of the optical fiber OF passes through no more than one capillary CAP.

It will be appreciated that other embodiments may be provided with different arrangements of anti-resonance elements. These may include arrangements having multiple rings of anti-resonance elements and arrangements having nested anti-resonance elements. Figure 10(a) shows an embodiment of HC-PCFs with three rings of capillaries CAP stacking on top of each other along the radial direction. In this embodiment, each capillary CAP is in contact with other capillaries both in the same ring and in a different ring. Furthermore, although the embodiment shown in Figure 8 comprises a ring of six capillaries, in other embodiments, one or more rings comprising any number of anti-resonance elements (for example 4, 5, 6, 7, 8, 9, 10, 11 or 12 capillaries) may be provided in the cladding portion.

Figure 10(b) shows a modified embodiment of the above discussed HC-PCFs with a single ring of tubular capillaries. In the example of Figure 10(b) there are two coaxial rings of tubular capillaries 21. For holding the inner and outer rings of tubular capillaries 21, a support tube ST may be included in the HC-PCF. The support tube may be made of silica.

The tubular capillaries of the examples of Figure 8 and Figures 10(a) and 10(b) may have a circular cross-sectional shape. Other shapes are also possible for the tubular capillaries, like elliptical or polygonal cross-sections. Additionally, the solid material of the tubular capillaries of the examples of Figure 8 and Figures 10(a) and 10(b) may comprise plastic material, like PMA, glass, like silica, or soft glass.

Figure 9 depicts a radiation source RDS for providing broadband output radiation. The radiation source RDS comprises a pulsed pump radiation source PRS or any other type of source that is capable of generating short pulses of a desired length and energy level; an optical fiber OF (for example of the type shown in Figure 8) with a hollow core HC; and a working medium WM (for example a gas) disposed within the hollow core HC. Although in Figure 9 the radiation source RDS comprises the optical fiber OF shown in Figure 8, in alternative embodiments other types of hollow core HC optical fiber OF may be used.

The pulsed pump radiation source PRS is configured to provide input radiation IRD. The hollow core HC of the optical fiber OF is arranged to receive the input radiation IRD from the pulsed pump radiation source PRS, and broaden it to provide output radiation ORD. The working medium WM enables the broadening of the frequency range of the received input radiation IRD so as to provide broadband output radiation ORD.

The radiation source RDS further comprises a reservoir RSV. The optical fiber OF is disposed inside the reservoir RSV. The reservoir RSV may also be referred to as a housing, container or gas cell. The reservoir RSV is configured to contain the working medium WM. The reservoir RSV may comprise one or more features, known in the art, for controlling, regulating, and/or monitoring the composition of the working medium WM (which may be a gas) inside the reservoir RSV. The reservoir RSV may comprise a first transparent window TW1. In use, the optical fiber OF is disposed inside the reservoir RSV such that the first transparent window TW1 is located proximate to an input end IE of the optical fiber OF. The first transparent window TW1 may form part of a wall of the reservoir RSV. The first transparent window TW1 may be transparent for at least the received input radiation frequencies, so that received input radiation IRD (or at least a large portion thereof) may be coupled into the optical fiber OF located inside reservoir RSV. It will be appreciated that optics (not shown) may be provided for coupling the input radiation IRD into the optical fiber OF.

The reservoir RSV comprises a second transparent window TW2, forming part of a wall of the reservoir RSV. In use, when the optical fiber OF is disposed inside the reservoir RSV, the second transparent window TW2 is located proximate to an output end OE of the optical fiber OF. The second transparent window TW2 may be transparent for at least the frequencies of the broadband output radiation ORD of the apparatus 120.

Alternatively, in another embodiment, the two opposed ends of the optical fiber OF may be placed inside different reservoirs. The optical fiber OF may comprise a first end section configured to receive input radiation IRD, and a second end section for outputting broadband output radiation ORD. The first end section may be placed inside a first reservoir, comprising a working medium WM. The second end section may be placed inside a second reservoir, wherein the second reservoir may also comprise a working medium WM. The functioning of the reservoirs may be as described in relation to Figure 9 above. The first reservoir may comprise a first transparent window, configured to be transparent for input radiation IRD. The second reservoir may comprise a second transparent window configured to be transparent for broadband output broadband radiation ORD. The first and second reservoirs may also comprise a sealable opening to permit the optical fiber OF to be placed partially inside and partially outside the reservoir, so that a gas can be sealed inside the reservoir. The optical fiber OF may further comprise a middle section not contained inside a reservoir. Such an arrangement using two separate gas reservoirs may be particularly convenient for embodiments wherein the optical fiber OF is relatively long (for example when the length is more than 1 m). It will be appreciated that for such arrangements which use two separate gas reservoirs, the two reservoirs (which may comprise one or more features, known in the art, for controlling, regulating, and/or monitoring the composition of a gas inside the two reservoirs) may be considered to provide an apparatus for providing the working medium WM within the hollow core HC of the optical fiber OF.

In this context a window may be transparent for a frequency if at least 50%, 75%, 85%, 90%, 95%, or 99% of incident radiation of that frequency on the window is transmitted through the window.

Both the first TW1 and the second TW2 transparent windows may form an airtight seal within the walls of the reservoir RSV so that the working medium WM (which may be a gas) may be contained within the reservoir RSV. It will be appreciated that the gas WM may be contained within the reservoir RSV at a pressure different to the ambient pressure of the reservoir RSV.

The working medium WM may comprise a noble gas such as Argon, Krypton, and Xenon, a Raman active gas such as Hydrogen, Deuterium and Nitrogen, or a gas mixture such as an Argon/Hydrogen mixture, a Xenon/Deuterium mixture, a Krypton/Nitrogen mixture, or a Nitrogen/Hydrogen mixture. Depending on the type of filling gas, the nonlinear optical processes can include modulational instability (MI), soliton self-compression, soliton fission, Kerr effect, Raman effect and dispersive wave generation (DWG), details of which are described in WO2018/127266A1 and US9160137B1 (both of which are hereby incorporated by reference). Since the dispersion of the filling gas can be tuned by varying the working medium WM pressure in the reservoir RSR (i.e. gas cell pressure), the generated broadband pulse dynamics and the associated spectral broadening characteristics can be adjusted so as to optimize the frequency conversion

In one implementation, the working medium WM may be disposed within the hollow core HC at least during receipt of input radiation IRD for producing broadband output radiation ORD. It will be appreciated that, while the optical fiber OF is not receiving input radiation IRD for producing broadband output radiation, the gas WM may be wholly or partially absent from the hollow core HC.

In order to achieve frequency broadening high intensity radiation may be desirable. An advantage of having a hollow core HC optical fiber OF is that it may achieve high intensity radiation through strong spatial confinement of radiation propagating through the optical fiber OF, achieving high localised radiation intensities. The radiation intensity inside the optical fiber OF may be high, for example due to high received input radiation intensity and/or due to strong spatial confinement of the radiation inside the optical fiber OF. An advantage of hollow core optical fibers is that they can guide radiation having a broader wavelength range that solid-core fibers and, in particular, hollow core optical fibers can guide radiation in both the ultraviolet and infrared ranges.

An advantage of using a hollow core HC optical fiber OF may be that the majority of the radiation guided inside the optical fiber OF is confined to the hollow core HC. Therefore, the majority of the interaction of the radiation inside the optical fiber OF is with the working medium WM, which is provided inside the hollow core HC of the optical fiber OF. As a result, the broadening effects of the working medium WM on the radiation may be increased.

The received input radiation IRD may be electromagnetic radiation. The input radiation IRD may be received as pulsed radiation. For example, the input radiation IRD may comprise ultrafast pulses, for example, generated by a laser.

The input radiation IRD may be coherent radiation. The input radiation IRD may be collimated radiation, an advantage of which may be to facilitate and improve the efficiency of coupling the input radiation IRD into the optical fiber OF. The input radiation IRD may comprise a single frequency, or a narrow range of frequencies. The input radiation IRD may be generated by a laser. Similarly, the output radiation ORD may be collimated and/or may be coherent.

The broadband range of the output radiation ORD may be a continuous range, comprising a continuous range of radiation frequencies. The output radiation ORD may comprise supercontinuum radiation. Continuous radiation may be beneficial for use in a number of applications, for example in metrology applications. For example, the continuous range of frequencies may be used to interrogate a large number of properties. The continuous range of frequencies may for example be used to determine and/or eliminate a frequency dependency of a measured property. Supercontinuum output radiation ORD may comprise for example electromagnetic radiation over a wavelength range of 100 nm - 4000 nm. The broadband output radiation ORD frequency range may be for example 400 nm - 900 nm, 500 nm - 900 nm, or 200 nm - 2000 nm. The supercontinuum output radiation ORD may comprise white light.

The input radiation IRD provided by the pulsed pump radiation source PRS may be pulsed. The input radiation IRD may comprise electromagnetic radiation of one or more frequencies between 200 nm and 2 $\mu$m. The input radiation IRD may for example comprise electromagnetic radiation with a wavelength of 1.03 $\mu$m. The repetition rate of the pulsed radiation IRD may be of an order of magnitude of 1 kHz to 100 MHz. The pulse energies may have an order of magnitude of 0.1 $\mu$J to 100 $\mu$J, for example 1-10 $\mu$J. A pulse duration for the input radiation IRD may be between 10 fs and 10 ps, for example 300 fs. The average power of input radiation IRD may be between 100 mW to several 100 W. The average power of input radiation IRD may for example be 20 - 50 W.

The pulsed pump radiation source PRS may be a laser. The spatio-temporal transmission characteristics of such a laser pulse, e.g. its spectral amplitude and phase, transmitted along the optical fiber OF can be varied and tuned through adjustment of (pump) laser parameters, working component WM variations, and optical fiber OF parameters. Said spatio-temporal transmission characteristics may include one or more of: output power, output mode profile, output temporal profile, width of the output temporal profile (or output pulse width), output spectral profile, and bandwidth of the output spectral profile (or output spectral bandwidth). Said pulsed pump radiation source PRS parameters may include one or more of: pump wavelength, pump pulse energy, pump pulse width, pump pulse repetition rate. Said optical fiber OF parameters may include one or more of: optical fiber length, size and shape of the hollow core HC, size and shape of the capillaries, thickness of the walls of the capillaries surrounding the hollow core HC. Said working component WM, e.g. filling gas, parameters may include one or more of: gas type, gas pressure and gas temperature.

The broadband output radiation ORD provided by the radiation source RDS may have an average output power of at least 1 W. The average output power may be at least 5 W. The average output power may be at least 10 W. The broadband output radiation ORD may be pulsed broadband output radiation ORD. The broadband output radiation ORD may have a power spectral density in the entire wavelength band of the output radiation of at least 0.01 mW/nm. The power spectral density in the entire wavelength band of the broadband output radiation may be at least 3 mW/nm.

As described above, there are many nonlinear optical processes involved in generation of broadband output radiation ORD (e.g., supercontinuum or white light). Which nonlinear optical process has a more pronounced spectral broadening effect over the others will depend on how the operating parameters are set. For example, by selecting a pump wavelength and/or an optical fiber OF such that the pump pulse propagates through the fiber in a normal dispersion region (positive group velocity dispersion (GVD)), self-phase modulation (SPM) is the dominant nonlinear optical process and is responsible for spectral expansion of the pump pulse. However in most cases, spectral broadening of input radiation IRD provided by the pulsed pump radiation source PRS is driven by soliton dynamics which require a pump pulse to propagate in an optical fiber OF in the anomalous dispersion region (negative GVD). This is because, in the anomalous dispersion region, the effects of Kerr nonlinearity and dispersion act in opposition to each other. When the pulse parameters of a pump pulse, which is launched into an optical fiber OF (e.g., HC-PCF) with anomalous chromatic dispersion, do not exactly match those of a soliton, the pump pulse will evolve into a soliton pulse with a certain soliton order and a dispersive wave.

It is known that soliton self-compression and modulation instability are the two primary mechanisms for spectral broadening in soliton driven broadband radiation generation. The distinction between the two mechanisms is that the soliton self-compression process is associated with low soliton orders whereas the modulation instability process is associated with high soliton orders. The soliton order N of the pulsed input radiation IRD is a convenient parameter that can be used to distinguish conditions under which spectral broadening is dominated by modulation instability and conditions under which spectral broadening is dominated by soliton self-compression. The soliton order N of the pulsed input radiation IRD is given by:

$$N = \sqrt{\gamma \frac{P_p \tau^2}{|\beta_2|}} \qquad (1)$$

where $\gamma$ is a material-dependent nonlinear parameter that describes the strength of the nonlinear phase change per Watt of optical power; $P_p$ is a pump peak power of the pulsed input radiation IRD; $\tau$ is a pump pulse duration of the pulsed input radiation IRD defined as the time interval in which the instantaneous optical power, normalized to its maximum, is greater than $1/e^2$; and $\beta_2$ is the group-velocity dispersion of the working medium WM.

Spectral broadening is typically dominated by modulation instability (MI) when $N \gg 20$ whereas spectral broadening is typically dominated by soliton self-compression (SSC) when $N \ll 20$.

Some known broadband radiation sources use arrangements which produce spectral broadening of pulsed input radiation IRD but wherein parameters of the pulsed input radiation IRD, the optical fiber and the working medium are configured to allow MI to produce the spectral broadening. There are a number of reasons why MI is used to produce the spectral broadening. First, the MI process is known to produce broadband radiation having a relatively flat intensity-wavelength distribution, provided a sufficient number of pulses are averaged. Such a broadband radiation source may be referred to as a white light radiation source (due to the relatively flat spectral intensity distribution). Second, the MI process can be achieved using relatively economical laser sources as the pump radiation source PRS.

On the other hand, in the regime of SSC, an input pump pulse undergoes compression in the time domain, which is accompanied by an increase in a width of the spectrum. Following SSC, the compressed pulse of soliton order No undergoes soliton fission, wherein the pulse splits into a plurality of solitons of order Ni < No. This soliton fission results in temporal broadening of the radiation pulse and a strong modulation of the spectrum with wavelength, due to interference of the plurality of solitons.

In contrast to the noise-seeded MI systems, broadband radiation generated by such SSC will have substantially no shot-to-shot variations. This is because in the SSC process, a moderate nonlinearity and anomalous dispersion co-operate to gradually and smoothly compress the duration of an input pump pulse along the fiber whereas in the MI process, the input pump pulse is disintegrated, due to a strong amplification of noise, into a sequence of random sub-pulses ("soliton shower"). As a result, advantageously, in a SSC system, each single compressed pulse features essentially the same broadband spectrum. In contrast, a modulation instability system would require integration over many pulses to obtain a broadband spectrum and reduce its inherent shot-to-shot variations. The intensity noise of the broadband output radiation ORD generated from a SSC system (e.g., P. Uebel, S. Bauerschmidt, Y. Ni, patent application EP3796080A1 (2019), which is incorporated herein by reference) can be several (e.g., two) orders of magnitude lower than that of the broadband output radiation ORD generated from a MI system and is typically limited by the noise of the pump radiation source PRS.

As can be seen from equation (1), the soliton order of the pulsed input radiation IRD is proportional to the pulse duration $\tau$ of the pulsed input radiation IRD. Therefore, generally prior art arrangements wherein soliton self-compression dominates, typically the pulse duration $\tau$ of the input pulsed input radiation IRD is reduced to of the order of 30 fs or less. To realize such an arrangement, typically pre-compressed, high-power femtosecond-fiber lasers (e.g., fiber based chirped pulse amplification systems (FCPA) typically offering pulse durations $\tau > 100$ fs of the input pulsed input radiation IRD) or Ti:Sapphire amplifiers (providing intrinsically short pulses with no need for pre-compression) are used as the pulsed pump radiation source PRS. On the one hand, in case of fiber-based FCPA, pre-compression requires an additional element for nonlinear spectral broadening and (one or more) elements providing negative group velocity dispersion GVD for temporal compression to said 30 fs duration or less. As their interface to subsequent spectral broadening stages is typically free-space, additional means for beam stabilization may be required, leading to bulkier, more cost intensive configurations. On the other hand, thermal constraints of the crystalline medium limit the average powers of Ti:Sapphire amplifiers to average powers of typically below 5W and repetition rates undesirably low (on the kHz-level) for applications in an optical metrology tool MT.

As mentioned above, for both MI and SSC processes, spectral broadening is driven by soliton dynamics and requires an anomalous dispersion environment. Figures 11(a) and 11(b) show two example simulations describing respectively the MI based and SSC based spectral evolution of a pulse of the input radiation IRD within the HC-PCF of the radiation source RDS (e.g., as shown in Figure 9). As can be seen in Figures 11(a) and 11(b), for both MI and SSC processes, spectral broadening within an initial section of the fiber is predominantly caused by SPM and therefore relatively weak. The length of such an initial fiber section may be different for different spectral broadening processes.

It is known that the spectral bandwidth $\Delta f_{\mathrm{SPM}}(z)$ in the SPM-dominated section scales linearly with position z along the fiber and can be approximated to an order-of-magnitude as [A. Zheltikov, "Analytical insights into self-phase modulation: beyond the basic theory," Opt. Express 26, 17571 (2018)]:

$$\Delta f_{\mathrm{SPM}}(z) \approx \frac{\gamma P_P}{\tau} z \qquad (2)$$

where $\gamma$ is the nonlinear coefficient, $P_p$ is the peak power of the pulse, $\tau$ is the pulse duration as defined above with respect to equation (1). Hence, the initial fiber section can be defined as the section in which the spectral bandwidth is sufficiently linear with position z along the fiber. An example criterion may be that the local slope of the bandwidth-vs-position curve shall not be larger than twice the slope in the SPM-dominated section.

As shown in Figure 12(a), in the case of the SSC process, the rate of the bandwidth increase per fiber length rises from a relatively flat level of about 50 THz/m (as guided by the solid line) to more than 100 THz/m at a normalized position of 0.69. Therefore, in this particular example simulation, the initial fiber section has a relative length of about 69% of the total fiber length. With this definition, typical lengths of the SPM-dominated fiber section in the SSC process may be between 64% (for lower soliton orders such as $N = 7.5$) and 77% (for higher soliton orders such as $N = 13.0$) of the total fiber length. At a constant soliton order, this range may be slightly different for different input pulse durations.

As shown in Figure 12(b), it is evident that the above definition for the SPM-dominated section criterion is also applicable to the MI process because the rate of the bandwidth increase within the initial fiber section is relatively flat (e.g., until the normalized position of 0.48). In addition, it is also possible to define the absolute length of the SPM-dominated section via the fiber length $L_{MI}$ from which onwards further broadening is strongly affected by noise amplification. This length can be analytically estimated using the nonlinear parameter $\gamma$ and the peak power $P_p$ as [J. M. Dudley, et al., "Supercontinuum generation in photonic crystal fiber," Rev. Mod. Phys. 78, 1135 (2006)]:

$$L_{MI} \approx \frac{16}{\gamma P_{\mathrm{P}}} \qquad (3)$$

By way of example and with reference to Figures 11(a) and 11(b), the initial SPM-dominated section may be considered as starting at the input end of the fiber and ending at a position along the fiber where a spectral extent of less than 400 nm is generated around the centroid pump wavelength of 1030 nm. Accordingly, the length of the initial SPM-dominated fiber section is determined to be around 48% of the total fiber length in the case of the MI-dominated process (as shown in Figure 11(a)) and around 70% of the total fiber length in the case of the SSC process (as shown in Figure 11(b)).

In all current configurations of the hollow core HC optical fiber OF (e.g., HC-PCF) based radiation source RDS, the gas cell RSV is configured such that the fiber can be mounted as straight as possible. Keeping the fiber straight avoids or minimizes fiber bend loss which increases with decreasing bend radius and is larger for shorter light wavelengths. The qualitative dependence of the bend loss on geometrical definitions and light wavelength can be understood in terms of a critical bend radius $R_{cr}$, which can be used as an analytically calculable lower limit of the bend radius. The critical bend radius $R_{cr}$ is expressed by [M. H. Frosz, et al., "Analyical formulation for the bend loss in single-ring hollow-core photonic crystal fibers," Photonics Res. 5, 88-91 (2017), which is incorporated herein by reference]:

$$R_{cr} = \frac{D^3}{\lambda^2} \frac{\pi^2}{u_{01}^2} \frac{(d/D)^2}{1 - d/D} \cos(\theta), \qquad (4)$$

where $D$ denotes the fiber core diameter, $d$ denotes the diameter of the surrounding capillaries, $\lambda$ denotes the light wavelength, $u_{01} \approx 2.405$ denotes the first zero of the Bessel function $J_0$, and the angle $\theta$ denotes the azimuthal orientation of the fiber cross-section with respect to the bending plane. Equation (4) shows that the smallest tolerable bend radius increases significantly with decreasing light wavelength. Such a relationship is confirmed by the bend loss measurement data provided in R. M. Carter, et al., "Measurement of resonant bend loss in anti-resonant hollow core optical fiber," Opt. Express 25, 20612 (2017)). Thus, fiber bend loss could heavily affect or distort the spectrum of the broadband output radiation ORD generated in the hollow-core HC optical fiber OF (e.g., HC-PCF), thus potentially causing its short-wavelength cutoff to shift above the shortest wavelength required by a metrology tool MT (e.g., one of the metrology tools described above) and rendering the spectrum practically unusable.

However, mounting the hollow core HC optical fiber OF in a perfectly straight configuration is not always desirable as it leads to a large footprint of the radiation source RDS and reduces flexibility in routing of the optical path in an industrialized product (e.g., a metrology tool MT as described above). This is especially relevant for an SSC based radiation source which requires a fiber length on the order of 1 m, several times longer than as the typical fiber length required by a MI based radiation source.

The inventors have found that in both the SSC and MI processes, the spectrum in the SPM-dominated region (e.g., as indicated in Figures 11 (a) and (b)) is sufficiently narrow-band such that effects of fiber bending loss on the output performance is insignificant. For example, Figures 13(a)-13(i) show a group of different simulation plots wherein each plot illustrates numerically simulated bend loss BL as a function of bend radius BR of a HC-PCF (e.g., as shown in Figure 8) for a different wavelength. In this example set of simulation data, the centroid wavelength of the input radiation IRD varies from 500 nm to 1300 nm with an increment of 100 nm. Here, the bend loss is defined as an excess power loss, which is the difference between the power loss of light transmission inside a bent fiber and the power loss of light transmission inside the same but straight fiber. As can be seen in Figures 13(a)-13(i), a general trend common for all the wavelengths is that the bend loss of the fiber increases as the bend radius decreases. In addition, for a given (constant) bend radius, the bend loss of the fiber increases as the wavelength decreases. Spikes that appear for decreasing light wavelength at larger bend radii originate from coupling of the hollow-core mode to modes located the capillaries, producing additional loss peaks.

Normally, a bend loss of $\leq 0.1$ dB/m is considered to be negligible. This translates to a 2% transmission loss over the entire fiber length as compared to the case where the fiber is kept straight. Such a fiber-bending induced transmission loss is small and thus not significantly detrimental to the performance of the HC-PCF based radiation source RDS. Therefore, it is proposed herein to bend or coil at least part of the SPM-dominated section of the HC-PCF so as to reduce the footprint of the radiation source RDS while substantially maintaining the desired characteristics (e.g., spectral width, short-wavelength cutoff, spectral flatness, etc.) of the broadband output radiation ORD.

According to a first aspect of the present disclosure, there is provided a broadband radiation device comprising a hollow-core photonic crystal fiber HC-PCF comprising: a hollow core extending along the length of the HC-PCF for confining in use a working medium under a pressure, an input end operable to receive a pulsed pump radiation; and an output end operable to emit a broadband output radiation resulting from spectral broadening of said pulsed pump radiation within the working medium confined within the HC-PCF. The HC-PCF may be divided into a first section extending over a first portion of said length of the HC-PCF, and a second section extending over a second portion of said length of the HC-PCF, , wherein the first section comprises the input end and at least part of the first section comprises a bend and/or one or more coils, and the second section comprises the output end and is substantially straight. The HC-PCF may be configured such that, within the first section, said spectral broadening occurs predominately via a SPM process and within the second section, said spectral broadening occurs predominately via a nonlinear optical process different from a self-phase modulation process. The terms "predominantly" or "dominated by" may suggest that the SPM induced spectral broadening accounts for greater than 50%, greater than 60%, greater than 70%, or greater than 80% of the overall spectral broadening that occurs within the first section of the HC-PCF.

In an embodiment, the pulsed pump radiation IRD may substantially preserve a narrow spectral bandwidth within the first section where the SPM-dominated spectral broadening occurs. That is to say, the SPM-dominated spectral broadening in the first section may be significantly weaker than the spectral broadening caused by the different nonlinear optical process in the second section. Preferably, the length of the SPM-dominated fiber section may be for example between 60% and 80%, between 60% and 77%, between 64% and 77%, between 64% and 74%, between 68% and 74%, or between 68% and 70% of the total fiber length.

In an embodiment, the different nonlinear optical process through which the pulsed input radiation IRD is spectrally broadened in the second section of the HC-PCF may be dominated by MI. The pulsed input radiation IRD may be configured to evolve into a soliton pulse with a soliton order of $N >> 20$, for example, N=30, N=35, N=40, or N=45.

In an embodiment, the different nonlinear optical process through which the pulsed input radiation IRD is spectrally broadened in the second section of the HC-PCF may be dominated by SSC. The pulsed input radiation IRD may be configured to evolve into a soliton pulse with a soliton order of $N << 20$, for example, $N \leq 7$, $N \leq 8$, $N \leq 9$, or $N \leq 10$.

In an embodiment, the HC-PCF may be a single ring HC-PCF, e.g., as shown in Figure 8. The critical bending radius may be determined from the diameter D of the hollow core, the diameter d of the capillaries, the azimuthal angle of the fiber cross-section and the (centroid) wavelength of the pulsed input radiation using equation (4) above.

In an embodiment, the HC-PCF may have a length, i.e. from the input end to the output end, which is suitably determined for producing the broadband output radiation ORD via the MI or SSC process. The fiber length may be for example, between 5 cm and 1000 cm, between 10 cm and 800 cm, between 20 cm and 500 cm, between 50 cm and 200 cm or around 500 cm for the MI process, around 1000 cm for the SSC process. In an embodiment, the first section of the HC-PCF may have a similar length as the second section of the HC-PCF. This may be the case when the MI process dominates the spectral broadening of the pulsed input radiation IRD. In an embodiment, the first section of the HC-PCF may be longer than the remaining section of the HC-PCF. This may be the case when the SSC process dominates the spectral broadening of the pulsed input radiation IRD.

How the first section of the HC-PCF is coiled and/or bent may depend on dimension requirements for the HC-PCF based broadband radiation source RDS. That is to say, the first section of the HC-PCF may be flexibly bent or coiled to meet certain dimension requirements insofar as the resultant bend or coil radius is not smaller than the critical bending radius. Alternatively, a trade-off may be made between radiation loss and dimension requirements; for example the critical bending radius may be allowed to be exceeded provided radiation loss is not too great for a particular application and compactness is considered more important. The critical bending radius may be such that the radiation loss in the first section does not exceed 50%, does not exceed 30%, does not exceed 10%, does not exceed 5%, does not exceed 1%, does not exceed 0.5% or does not exceed 0.1% for example.

In some embodiments, the HC-PCF may be bent by a certain angle to follow a circular, part-circular, elliptical or part-elliptical path. Here the bend angle may be defined as the angle between two fiber portions at two respective sides of the bend. The bend angle may be for example, at least 20 degrees, at least 45 degrees, at least 60 degrees, at least 90 degrees, at least 120 degrees, or at least 135 degrees. In some embodiments, the HC-PCF may be coiled into one or more full circles or ellipses. In all such embodiments, the bend or coil radius may be maintained larger than the critical bending radius as determined by putting relevant parameters of the HC-PCF and the pulsed input radiation IRD into equation (4) above.

In an embodiment, the broadband radiation device may further comprise the working medium WM confined within the hollow core; and a pulsed pump radiation source PRS arranged to produce the pulsed pump radiation IRD. In an embodiment, the working medium WM is configured to produce anomalous dispersion.

In an embodiment, the input pulsewidth of the pulsed pump radiation IRD may be shorter than 5000 fs, shorter than 1000 fs, shorter than 500 fs, shorter than 300 fs, or shorter than 100 fs.

In an embodiment, the broadband output radiation ORD may comprise a spectrum partially overlapping with the range of 200 nm to 2000 nm, the range of 400 nm to 1600 nm, or the range of 500 nm to 900 nm. In an embodiment, the output broadband radiation may comprise a spectrum having a full width half maximum (FWHM) width of at least 500 nm, at least 400 nm, at least 300 nm, or at least 200 nm. In an embodiment, the broadband output radiation may comprise a spectrum spanning from 500 nm to 900 nm.

In an embodiment, the broadband radiation device may comprise a first gas cell for containing the working medium. The first gas cell may be configured to at least partially enclose the HC-PCF. In an embodiment, the broadband radiation device may further comprise a second gas cell for containing the working medium. In such an embodiment, the first gas cell may be configured to enclose a first portion comprising the input end of the HC-PCF and operate at a first pressure, and the second gas cell may be configured to enclose a second portion comprising the output end of the HC-PCF and operate at a second pressure. In an embodiment, the first pressure in the first gas cell may be different to (e.g., lower than) the second gas pressure in the second gas cell.

In an embodiment, the first gas cell may be configured to enclose a first portion comprising the input end of the HC-PCF and/or a second portion comprising the output end of the HC-PCF. In an embodiment, the first gas cell may be configured to enclose only the first section (or the SPM dominated section) of the HC-PCF. In an embodiment, the first gas cell may be configured to enclose the entire HC-PCF. In an embodiment, the first gas cell may be configured to enclose only the second section of the HC-PCF. In an embodiment, at least a portion of the first gas cell may be bent or coiled in a manner similar to that of the bent or coiled part of the HC-PCF.

Figures 14(a)-14(e) schematically depict five embodiments of a broadband radiation source RDS wherein at least part of a first section of the HC-PCF is bent or coiled and the HC-PCF is at least partially enclosed in one or more gas cells that are configured differently for different embodiments.

With reference to Figure 14(a), in an embodiment, at least part of the first section of the HC-PCF may be coiled into a substantially circular loop. It will be appreciated that the fiber may also be coiled into other shapes (e.g., elliptical shape). The HC-PCF may be fully enclosed by a first gas cell RSV1, a coiled connection tube CCT, and a second gas cell RSV2, which may be filled with a same working medium WM. The first gas cell RSV1 may be configured to enclose a first end portion comprising the input end of the HC-PCF. The second gas cell RSV2 may be configured to enclose a second end portion comprising the output end of the HC-PCF. The second end portion may comprise part or all of the second section of the HC-PCF. Although not necessary, both input and output end portions may be substantially parallel with the propagation direction (or the Z direction with reference to the local coordinate system next to Figure 14(d)) of the pulsed pump radiation IRD. The coiled connection tube CCT may have substantially the same coil shape (e.g., circular or elliptical shape) as the coiled part of the HC-PCF and may be configured to enclose at least the coiled part of the HC-PCF.

The first gas cell RSV1 may have a first diameter, the second gas cell RSV2 may have a second diameter and the coiled connection tube CCT may have a third diameter, all of the first diameter, the second diameter and the third diameter being along a transverse direction which is perpendicular to the fiber axis of the HC-PCF. In an embodiment, the first diameter of the first gas cell RSV1 may be similar to the second diameter of the second gas cell RSV2. The difference between the first diameter and the second diameter may be for example within $\pm10\%$, within $\pm15\%$, within $\pm20\%$, within $\pm25\%$, or within $\pm30\%$. In an embodiment, the third diameter of the coiled connection tube CCT may be smaller than both of the first diameter of the first gas cell RSV1 and the second diameter of the second gas cell RSV2. The third diameter may be for example no more than 50%, no more than 40%, no more than 30%, or no more than 20% of both of the first diameter and the second diameter. In an embodiment, the radius-of-curvature (or the coil radius) of the coiled connection tube may be for example between 1 cm and 500 cm, between 1 cm and 400 cm, between 1 cm and 300 cm, between 1 cm and 200 cm, or between 2 cm and 100 cm.

The first gas cell RSV1 and the second gas cell RSV2 may each comprise an input end and an output end. In the embodiment, the first gas cell RSV1 may further comprise a gas connection through which the working medium WM may be pumped into or evacuated from the first gas cell RSV1. The two ends of the coiled connection tube CCT may be sealably connected to the output end of the first gas cell RSV1 and the input end of the second gas cell RSV2, respectively. Such an arrangement may allow the working medium WM to flow e.g., from the first gas cell RSV1, via the coiled connection tube CCT, to the second gas cell RSV2 and consequently the working medium WM may be under substantially the same pressure P1 in the first gas cell RSV1, the coiled connection tube and the second gas cell RSV1.

The first gas cell RSV1 may comprise a first transparent window TW1 located at the input end of the first gas cell RSV1 and configured to substantially transmit the pulsed pump radiation IRD. The second gas cell RSV2 may comprise a second transparent window TW2 located at the output end of the second gas cell RSV2 and configured to substantially transmit the broadband output radiation ORD. The pulsed pump radiation IRD may be emitted from a free-space pulsed pump radiation source PRS and focused into the hollow core of the HC-PCF via a lens. Once passing through the first transparent window TW1 of the first gas cell RSV1, the pulsed pump radiation IRD may enter into the hollow core of the HC-PCF via the input end of the fiber and may subsequently be spectrally broadened into the broadband output radiation ORD. The broadband output radiation ORD may exit the HC-PCF via the output end of the fiber and may eventually leave the second gas cell RSV2 through the second transparent window TW2.

With reference to Figure 14(b), in an embodiment, at least part of the first section of the HC-PCF may be coiled in a manner similar to the coiled fiber shown in Figure 14(a). The HC-PCF may be partially enclosed by a first gas cell RSV1' and a second gas cell RSV2', which may be filled with the same working medium WM. It is also possible that the working medium WM in the first gas cell RSV1' is different to the working medium WM in the second gas cell RSV2'. Similar to the embodiment of Figure 14(a), the first gas cell RSV1' may be configured to enclose a first end portion comprising the input end of the HC-PCF and the second gas cell RSV2' may be configured to enclose a second end portion comprising the output end of the HC-PCF. The second end portion may comprise part or all of the second section of the HC-PCF. However, the main difference between the two embodiments may be that the embodiment of Figure 14(b) may comprise no coiled connection tube CCT and consequently the working medium WM may not flow between the first and second gas cells, RSV1', RSV2'. In this embodiment, there may be a gas-tight sealing between the HC-PCF and each of first gas cell RSV1' and the second gas cell RSV2'. For example, the first gas cell RSV1' may comprise a first gas-tight opening GTO1 at the output end of the cell RSV1' through which the HC-PCF can be sealably inserted into the first gas cell RSV1'. Similarly, the second gas cell RSV2' may comprise a second gas-tight opening GTO2 at the input end of the cell RSV2' through which the HC-PCF can be sealably inserted into the second gas cell RSV2'.

Since there is no gas flow between the first gas cell RSV1' and the second gas cell RSV2', the second gas cell RSV2' may also comprise a gas connection through which a same or different working medium WM may be pumped into or evacuated from the second gas cell RSV2'. This configuration may allow the pressure and/or the type of the working medium WM in the first gas cell RSV1' and the second gas cell RSV2' to be independently controlled. In an embodiment, the first gas cell RSV1' and the second gas cell RSV2' may be filled with a same working medium WM and the two gas cells RSV1', RSV2' may be set to two different pressure levels, i.e. a first pressure P1' and a second pressure P2'. In this way, it is possible to maintain a pressure gradient between the first pressure P1' in the first gas cell RSV1' and the second pressure P2' in the second gas cell RSV2' because the gas flow through the HC-PCF is negligible compared to a piped connection between the gas cells (e.g., the embodiment shown in Figure 14(a)). Such a pressure gradient may be useful to reduce in-coupling fluctuations (e.g., by keeping the input end of the HC-PCF fiber at a lower pressure P1') and may allow to optimize the spectral extent of the broadband output radiation ORD generated via the SSC process.

With reference to Figure 14(c), in an embodiment, at least part of the first section of the HC-PCF may be coiled in a manner similar to the coiled fiber shown in Figure 14(a) or 14(b). The HC-PCF may be fully enclosed by a coiled connection tube CCT' and a gas cell RSV2", which may be filled with a same working medium WM. The coiled connection tube CCT' may be configured to enclose at least the entire first section of the HC-PCF. The gas cell RSV2" may be configured to enclose an end portion comprising the output end of the HC-PCF. The end portion of the HC-PCF may comprise part or all of the second section of the HC-PCF.

Similar to the embodiment of Figure 14(a), an output end of the coiled connection tube CCT' may be sealably connected to an input end of the gas cell RSV2" such that the working medium WM may flow between the coiled connection tube CCT' and the gas cell RSV2". The pressure P2" of the working medium WM in both of the coiled connection tube CCT' and the gas cell RSV2" may be controlled by a gas connection of the gas cell RSV2". Instead of sealably connecting to another gas cell (e.g., the first gas cell RSV1 shown in Figure 14(a)), an input end of the coiled connection tube CCT' may be sealably connected to a fiber splice interface FSI. In an embodiment, the transverse diameter of the coiled connection tube CCT' may be smaller than that of the gas cell RSV2". The transverse diameter of the coiled connection tube CCT' may be for example no more than 50%, no more than 40%, no more than 30%, or no more than 20% of the transverse diameter of the gas cell RSV2".

The input end of the HC-PCF may be spliced to a transport fiber TF configured to transport the pulsed pump radiation IRD from the pulsed pump radiation source PRS to the HC-PCF. In an embodiment, the transport fiber TF may be part of the pulsed pump radiation source PRS. The fiber splice interface FSI may be configured to hold the spliced fiber ends of the transport fiber TF and the HC-PCF while providing a gas-tight sealing to the input end of the coiled connection tube CCT'.

While the foregoing embodiments require at least two separate gas containing components for partially or fully enclosing the HC-PCF, the embodiments shown in Figures 14(d) and 14(e) may use a single-piece gas cell to fully enclose the HC-PCF. With reference to Figures 14(d) and 14(e), the single-piece gas cell RSV3, RSV3' may have a substantially constant transverse diameter along the length of the gas cell RSV3, RSV3'. The gas cell RSV3, RSV3' may comprise a first straight section SS1, SS1', a coiled section CS (e.g., as shown Figure 14(d)) or a bent section BS (e.g., as shown Figure 14(e)) and a second straight section SS2, SS2'. Similar to the foregoing embodiments, the gas cell RSV3, RSV3' may comprise a first transparent window TW1 configured to transmit the pulsed pump radiation IRD and a second transparent window TW2 configured to transmit the broadband output radiation ORD. The gas cell RSV3, RSV3' may also comprise a gas connection through which the working medium WM can be pumped into or evacuated from the gas cell RSV3, RSV3' and the pressure P3 of the working medium can be controlled.

In the case of Figure 14(d), the first section of the HC-PCF may be at least partially enclosed in the coiled section CS of the single-piece gas cell RSV3. In the case of Figure 14(e), the first section of the HC-PCF may be at least partially enclosed in the bent section BS of the single-piece gas cell RSV3'. For both cases, the second section of the HC-PCF in which spectral broadening of the pulsed pump radiation IRD is dominated by the MI or SSC process may be fully enclosed in the second straight section SS2, SS2' of the gas cell RSV3, RSV3'. In an embodiment, the second straight section SS2, SS2' may also enclose part of the first section of the HC-PCF.

Figure 15 is a block diagram that illustrates a computer system 1600 that may assist in implementing the methods and flows disclosed herein. Computer system 1600 includes a bus 1602 or other communication mechanism for communicating information, and a processor 1604 (or multiple processors 1604 and 1605) coupled with bus 1602 for processing information. Computer system 1600 also includes a main memory 1606, such as a random access memory (RAM) or other dynamic storage device, coupled to bus 1602 for storing information and instructions to be executed by processor 1604. Main memory 1606 also may be used for storing temporary variables or other intermediate information during execution of instructions to be executed by processor 1604. Computer system 1600 further includes a read only memory (ROM) 1608 or other static storage device coupled to bus 1602 for storing static information and instructions for processor 1604. A storage device 1610, such as a magnetic disk or optical disk, is provided and coupled to bus 1602 for storing information and instructions.

Computer system 1600 may be coupled via bus 1602 to a display 1612, such as a cathode ray tube (CRT) or flat panel or touch panel display for displaying information to a computer user. An input device 1614, including alphanumeric and other keys, is coupled to bus 1602 for communicating information and command selections to processor 1604. Another type of user input device is cursor control 1616, such as a mouse, a trackball, or cursor direction keys for communicating direction information and command selections to processor 1604 and for controlling cursor movement on display 1612. This input device typically has two degrees of freedom in two axes, a first axis (e.g., x) and a second axis (e.g., y), that allows the device to specify positions in a plane. A touch panel (screen) display may also be used as an input device.

One or more of the methods as described herein may be performed by computer system 1600 in response to processor 1604 executing one or more sequences of one or more instructions contained in main memory 1606. Such instructions may be read into main memory 1606 from another computer-readable medium, such as storage device 1610. Execution of the sequences of instructions contained in main memory 1606 causes processor 1604 to perform the process steps described herein. One or more processors in a multi-processing arrangement may also be employed to execute the sequences of instructions contained in main memory 1606. In an alternative embodiment, hard-wired circuitry may be used in place of or in combination with software instructions. Thus, the description herein is not limited to any specific combination of hardware circuitry and software.

The term "computer-readable medium" as used herein refers to any medium that participates in providing instructions to processor 1604 for execution. Such a medium may take many forms, including but not limited to, non-volatile media, volatile media, and transmission media. Non-volatile media include, for example, optical or magnetic disks, such as storage device 1610. Volatile media include dynamic memory, such as main memory 1606. Transmission media include coaxial cables, copper wire and fiber optics, including the wires that comprise bus 1602. Transmission media can also take the form of acoustic or light waves, such as those generated during radio frequency (RF) and infrared (IR) data communications. Common forms of computer-readable media include, for example, a floppy disk, a flexible disk, hard disk, magnetic tape, any other magnetic medium, a CD-ROM, DVD, any other optical medium, punch cards, paper tape, any other physical medium with patterns of holes, a RAM, a PROM, and EPROM, a FLASH-EPROM, any other memory chip or cartridge, a carrier wave as described hereinafter, or any other medium from which a computer can read.

Various forms of computer readable media may be involved in carrying one or more sequences of one or more instructions to processor 1604 for execution. For example, the instructions may initially be borne on a magnetic disk of a remote computer. The remote computer can load the instructions into its dynamic memory and send the instructions over a telephone line using a modem. A modem local to computer system 1600 can receive the data on the telephone line and use an infrared transmitter to convert the data to an infrared signal. An infrared detector coupled to bus 1602 can receive the data carried in the infrared signal and place the data on bus 1602. Bus 1602 carries the data to main memory 1606, from which processor 1604 retrieves and executes the instructions. The instructions received by main memory 1606 may optionally be stored on storage device 1610 either before or after execution by processor 1604.

Computer system 1600 also preferably includes a communication interface 1618 coupled to bus 1602. Communication interface 1618 provides a two-way data communication coupling to a network link 1620 that is connected to a local network 1622. For example, communication interface 1618 may be an integrated services digital network (ISDN) card or a modem to provide a data communication connection to a corresponding type of telephone line. As another example, communication interface 1618 may be a local area network (LAN) card to provide a data communication connection to a compatible LAN. Wireless links may also be implemented. In any such implementation, communication interface 1618 sends and receives electrical, electromagnetic or optical signals that carry digital data streams representing various types of information.

Network link 1620 typically provides data communication through one or more networks to other data devices. For example, network link 1620 may provide a connection through local network 1622 to a host computer 1624 or to data equipment operated by an Internet Service Provider (ISP) 1626. ISP 1626 in turn provides data communication services through the worldwide packet data communication network, now commonly referred to as the "Internet" 1628. Local network 1622 and Internet 1628 both use electrical, electromagnetic or optical signals that carry digital data streams. The signals through the various networks and the signals on network link 1620 and through communication interface 1618, which carry the digital data to and from computer system 1600, are exemplary forms of carrier waves transporting the information.

Computer system 1600 may send messages and receive data, including program code, through the network(s), network link 1620, and communication interface 1618. In the Internet example, a server 1630 might transmit a requested code for an application program through Internet 1628, ISP 1626, local network 1622 and communication interface 1618. One such downloaded application may provide for one or more of the techniques described herein, for example. The received code may be executed by processor 1604 as it is received, and/or stored in storage device 1610, or other non-volatile storage for later execution. In this manner, computer system 1600 may obtain application code in the form of a carrier wave.

Further embodiments are disclosed in the following list of numbered clauses:

1. A broadband radiation device comprising a hollow-core photonic crystal fiber HC-PCF comprising:

> a hollow core extending along the length of the HC-PCF for confining in use a working medium under a pressure, an input end operable to receive a pulsed pump radiation; and
> an output end operable to emit a broadband output radiation resulting from spectral broadening of said pulsed pump radiation within the working medium confined within the HC-PCF;
> wherein the HC-PCF is divided into a first section extending over a first portion of said length of the HC-PCF, and a second section extending over a second portion of said length of the HC-PCF, wherein the first section comprises the input end and at least part of the first section comprises a bend and/or one or more coils, and the second section comprises the output end and is substantially straight; and
> wherein the HC-PCF is configured such that, within the first section, said spectral broadening occurs predominately via a self-phase modulation process and within the second section, said spectral broadening occurs predominately via a nonlinear optical process different from a self-phase modulation process.

2. A broadband radiation device as defined in clause 1, wherein the different nonlinear optical process is dominated by modulational instability MI or soliton self-compression SSC.

3. A broadband radiation device as defined in clause 1 or 2, wherein the HC-PCF is a single ring HC-PCF.

4. A broadband radiation device as defined in any preceding clause, wherein the at least part of the first section of the HC-PCF is coiled and/or bent in such a way that a resultant coil radius and/or bend radius are not smaller than a critical bending radius determined by $R_{cr} = \frac{D^3}{\lambda^2} \frac{\pi^2}{u_{01}^2} \frac{(d/D)^2}{1-d/D} \cos(\theta)$, wherein $D$ denotes hollow core diameter of the HC-PCF, $d$ denotes capillary diameter of the HC-PCF, $\lambda$ denotes wavelength of the pulsed pump radiation, $u_{01}$ denotes the first zero of the Bessel function $J_0$, and $\theta$ denotes azimuthal angle between cross-section of the HC-PCF and bending plane.

5. A broadband radiation device as defined in any preceding clause, wherein the HC-PCF is bent such that the angle between two fiber portions at two respective sides of the bend is at least 45 degrees.

6. A broadband radiation device as defined in any preceding clause, wherein the HC-PCF is bent such that the angle between two fiber portions at two respective sides of the bend is at least 90 degrees.

7. A broadband radiation device as defined in any preceding clause, comprising a first gas cell for containing the working medium, said first gas cell being configured to at least partially enclose the HC-PCF.

8. A broadband radiation device as defined in clause 7, wherein the first gas cell is configured to enclose a first portion comprising the input end of the HC-PCF and/or a second portion comprising the output end of the HC-PCF.

9. A broadband radiation device as defined in clause 7 or 8, wherein the first gas cell is configured to enclose only the first section of the HC-PCF.

10. A broadband radiation device as defined in clause 7 or 8, wherein the first gas cell is configured to enclose the entire HC-PCF.

11. A broadband radiation device as defined in clause 7 or 8, wherein the first gas cell is configured to enclose only the second section of the HC-PCF.

12. A broadband radiation device as defined in any of clauses 7 to 10, wherein at least a portion of the first gas cell is bent or coiled so as to enclose the bent or coiled part of the HC-PCF.

13. A broadband radiation device as defined in clause 9, further comprising a second gas cell for containing the working medium; the second gas cell being configured to enclose the second section and operate at a second pressure.

14. A broadband radiation device as defined in clause 13, wherein the first pressure in the first gas cell is different to the second pressure in the second gas cell.

15. A broadband radiation device as defined in any preceding clause, wherein a length between the input end and the output end of the HC-PCF is between 5 cm and 1000 cm.

16. A broadband radiation device as defined in any preceding clause, wherein a length between the input end and the output end of the HC-PCF is between 10 cm and 800 cm.

17. A broadband radiation device as defined in any preceding clause, wherein a length between the input end and the output end of the HC-PCF is between 20 cm and 500 cm.

18. A broadband radiation device as defined in any preceding clause, further comprising:

the working medium confined within the hollow core; and

a pulsed pump radiation source arranged to produce the pulsed pump radiation.

19. A broadband radiation device as defined in clause 18, being operable such that an input pulsewidth of the pulsed pump radiation is shorter than 1000 fs.

20. A broadband radiation device as defined in clause 19, being operable such that the input pulsewidth of the pulsed pump radiation is shorter than 500 fs.

21. A broadband radiation device as defined in any of clauses 18 to 20, wherein the working medium is configured to produce anomalous dispersion.

22. A broadband radiation device as defined in any preceding clause, wherein the output broadband radiation comprises a spectrum partially overlapping with the range of 200 nm to 2000 nm.

23. A broadband radiation device as defined in any preceding clause, wherein output broadband radiation comprises a spectrum partially overlapping with the range of 400 nm to 1600 nm.

24. A broadband radiation device as defined in any preceding clause, wherein output broadband radiation comprises a spectrum having a full width half maximum (FWHM) width of at least 500 nm.

25. A broadband radiation device as defined in any preceding clause, wherein output broadband radiation comprises having a FWHM width of at least 300 nm.

26. A broadband radiation device as defined in any preceding clause, wherein output broadband radiation comprises a spectrum spanning from 500 nm to 900 nm.

27. A broadband radiation device as defined in any preceding clause, wherein the first portion is between 60% and 80% of the length from the input end to the output end of the HC-PCF.

28. A broadband radiation device as defined in any preceding clause, wherein the first portion has a length determined by $L_{MI} \approx \dfrac{16}{\gamma P_P}$ , wherein $\gamma$ is a material-dependent nonlinear parameter and $P_p$ is a peak power of the pulsed pump radiation.

29. A metrology device comprising a radiation source as defined in any preceding clause.

30. A metrology device as defined in clause 29, comprising a scatterometer metrology apparatus, a level sensor or an alignment sensor.

31. A method for producing broadband output radiation, comprising:

receiving a pulsed pump radiation at an input end of a hollow-core photonic crystal fiber HC-PCF having a hollow core confining a working medium under a pressure; and

emitting a broadband output radiation at an output end of the HC-PCF, said broadband output radiation resulting from spectral broadening of said pulsed pump radiation within the working medium confined within the HC-PCF; wherein the HC-PCF is divided into a first section extending over a first portion of said length of the HC-PCF, and a second section extending over a second portion of said length of the HC-PCF, wherein the first section comprises the input end and at least part of the first section comprises a bend and/or one or more coils, and the second section comprises the output end and is substantially straight; and

wherein the HC-PCF is configured such that, within the first section, said spectral broadening occurs predominately via a self-phase modulation process and within the second section, said spectral broadening occurs predominately via a nonlinear optical process different from a self-phase modulation process.

32. A method as defined in clause 31, wherein the different nonlinear optical process is dominated by modulational instability MI or soliton self-compression SSC.

33. A method as defined in clause 31 or 32, wherein the HC-PCF is a single ring HC-PCF.

34. A method as defined in clause 33, wherein the at least part of the first section of the HC-PCF is coiled and/or bent in such a way that a resultant coil radius and/or bend radius are not smaller than a critical bending radius determined by $R_{cr} = \dfrac{D^3}{\lambda^2} \dfrac{\pi^2}{u_{01}^2} \dfrac{(d/D)^2}{1-d/D} \cos(\theta)$ , wherein $D$ denotes hollow core diameter of the HC-PCF, $d$ denotes capillary diameter of the HC-PCF, $\lambda$ denotes wavelength of the pulsed pump radiation, $u_{01} \approx 2.405$ denotes the first zero of the Bessel function $J_0$, and $\theta$ denotes azimuthal angle between cross-section of the HC-PCF and bending plane.

35. A method as defined in any of clauses 31 to 34, wherein a length between the input end and the output end of the HC-PCF is between 5 cm and 1000 cm.

36. A method as defined in any of clauses 31 to 35, wherein a length between the input end and the output end of the HC-PCF is between 10 cm and 800 cm.

37. A method as defined in any of clauses 31 to 36, wherein a length between the input end and the output end of the HC-PCF is between 20 cm and 500 cm.

38. A method as defined in any of clauses 31 to 37, being operable such that the pulsewidth of the pulsed pump radiation is shorter than 1000 fs.

39. A method as defined in any of clauses 31 to 38, being operable such that the pulsewidth of the pulsed pump radiation is shorter than 500 fs.

40. A method as defined in any of clauses 31 to 39, wherein the output broadband radiation comprises a spectrum partially overlapping with the range of 200 nm to 2000 nm.

41. A method as defined in any of clauses 31 to 40, wherein output broadband radiation comprises a spectrum partially overlapping with the range of 400 nm to 1600 nm.

42. A method as defined in any of clauses 31 to 41, wherein output broadband radiation comprises a spectrum having a full width half maximum (FWHM) width of at least 500 nm.

43. A method as defined in any of clauses 31 to 42, wherein output broadband radiation comprises having a FWHM width of at least 300 nm.

44. A method as defined in any of clauses 31 to 43, wherein output broadband radiation comprises a spectrum spanning from 500 nm to 900 nm.

Although specific reference may be made in this text to the use of lithographic apparatus in the manufacture of ICs, it should be understood that the lithographic apparatus described herein may have other applications. Possible other applications include the manufacture of integrated optical systems, guidance and detection patterns for magnetic domain memories, flat-panel displays, liquid-crystal displays (LCDs), thin-film magnetic heads, etc.

Although specific reference may be made in this text to embodiments of the invention in the context of a lithographic apparatus, embodiments of the invention may be used in other apparatus. Embodiments of the invention may form part of a mask inspection apparatus, a metrology apparatus, or any apparatus that measures or processes an object such as a wafer (or other substrate) or mask (or other patterning device). These apparatus may be generally referred to as lithographic tools. Such a lithographic tool may use vacuum conditions or ambient (non-vacuum) conditions.

Although specific reference may have been made above to the use of embodiments of the invention in the context of optical lithography, it will be appreciated that the invention, where the context allows, is not limited to optical lithography and may be used in other applications, for example imprint lithography.

Although specific reference may be made to "metrology apparatus / tool / system" or "inspection apparatus / tool / system", these terms may refer to the same or similar types of tools, apparatuses or systems. For example, the inspection or metrology apparatus that comprises an embodiment of the invention may be used to determine characteristics of structures on a substrate or on a wafer. The inspection apparatus or metrology apparatus that comprises an embodiment of the invention may be used to detect defects of a substrate or defects of structures on a substrate or on a wafer. In such an embodiment, a characteristic of interest of the structure on the substrate may relate to defects in the structure, the absence of a specific part of the structure, or the presence of an unwanted structure on the substrate or on the wafer.

While specific embodiments of the invention have been described above, it will be appreciated that the invention may be practiced otherwise than as described. The descriptions above are intended to be illustrative, not limiting. Thus it will be apparent to one skilled in the art that modifications may be made to the invention as described without departing from the scope of the claims set out below.

**Claims**

1.  A broadband radiation device comprising a hollow-core photonic crystal fiber HC-PCF comprising:

    a hollow core extending along the length of the HC-PCF for confining in use a working medium under a pressure, an input end operable to receive a pulsed pump radiation; and
    an output end operable to emit a broadband output radiation resulting from spectral broadening of said pulsed pump radiation within the working medium confined within the HC-PCF;
    wherein the HC-PCF is divided into a first section extending over a first portion of said length of the HC-PCF, and a second section extending over a second portion of said length of the HC-PCF, wherein the first section comprises the input end and at least part of the first section comprises a bend and/or one or more coils, and the second section comprises the output end and is substantially straight; and
    wherein the HC-PCF is configured such that, within the first section, said spectral broadening occurs predominately via a self-phase modulation process and within the second section, said spectral broadening occurs predominately via a nonlinear optical process different from a self-phase modulation process.

2. A broadband radiation device as claimed in claim 1, wherein the different nonlinear optical process is dominated by modulational instability MI or soliton self-compression SSC.

3. A broadband radiation device as claimed any preceding claim, wherein the at least part of the first section of the HC-PCF is coiled and/or bent in such a way that a resultant coil radius and/or bend radius are not smaller than a critical bending radius determined by $R_{cr} = \frac{D^3}{\lambda^2} \frac{\pi^2}{u_{01}^2} \frac{(d/D)^2}{1-d/D} \cos(\theta)$ wherein $D$ denotes hollow core diameter of the HC-PCF, $d$ denotes capillary diameter of the HC-PCF, $\lambda$ denotes wavelength of the pulsed pump radiation, $u_{01}$ denotes the first zero of the Bessel function $J_0$, and $\theta$ denotes azimuthal angle between cross-section of the HC-PCF and bending plane.

4. A broadband radiation device as claimed in any preceding claim, wherein the HC-PCF is bent such that the angle between two fiber portions at two respective sides of the bend is at least 45 degrees, or, optionally, the bend is at least 90 egrees.

5. A broadband radiation device as claimed in any preceding claim, comprising a first gas cell for containing the working medium, said first gas cell being configured to at least partially enclose the HC-PCF.

6. A broadband radiation device as claimed in claim 5, wherein the first gas cell is configured to enclose a first portion comprising the input end of the HC-PCF and/or a second portion comprising the output end of the HC-PCF.

7. A broadband radiation device as claimed in claim 5 or 6, wherein the first gas cell is configured to enclose the entire HC-PCF.

8. A broadband radiation device as claimed in any of claims 5 to 7, wherein at least a portion of the first gas cell is bent or coiled so as to enclose the bent or coiled part of the HC-PCF.

9. A broadband radiation device as claimed in any preceding claim, wherein a length between the input end and the output end of the HC-PCF is between 5 cm and 1000 cm.

10. A broadband radiation device as claimed in any preceding claim, further comprising:

    the working medium confined within the hollow core; and
    a pulsed pump radiation source arranged to produce the pulsed pump radiation.

11. A broadband radiation device as claimed in claim 10, being operable such that an input pulsewidth of the pulsed pump radiation is shorter than 1000 fs, or, optionally, shorter than 500 fs.

12. A broadband radiation device as claimed in any preceding claim, wherein the first portion is between 60% and 80% of the length from the input end to the output end of the HC-PCF.

13. A broadband radiation device as claimed in any preceding claim, wherein the first portion has a length determined by $L_{MI} \approx \frac{16}{\gamma P_P}$, wherein $\gamma$ is a material-dependent nonlinear parameter and $P_p$ is a peak power of the pulsed pump radiation.

14. A metrology device comprising a radiation source as claimed in any preceding claim.

15. A method for producing broadband output radiation, comprising:

    receiving a pulsed pump radiation at an input end of a hollow-core photonic crystal fiber HC-PCF having a hollow core confining a working medium under a pressure; and
    emitting a broadband output radiation at an output end of the HC-PCF, said broadband output radiation resulting from spectral broadening of said pulsed pump radiation within the working medium confined within the HC-PCF; wherein the HC-PCF is divided into a first section extending over a first portion of said length of the HC-PCF, and a second section extending over a second portion of said length of the HC-PCF, wherein the first section comprises the input end and at least part of the first section comprises a bend and/or one or more coils, and the second section comprises the output end and is substantially straight; and wherein the HC-PCF is configured such that, within the first section, said spectral broadening occurs predominately via a self-phase modulation process and within the second section, said spectral broadening occurs predominately via a nonlinear optical process different from a self-phase modulation process.

**Fig. 1**

**Fig. 2**

**Fig. 3**

LA

SC1

SC3

0

-1    +1

CL

MT

SC2

**Fig. 4**

2

4

SM1

Z

X

PU

W

I

6

Z

8

λ

X

**Fig. 5**

**Fig. 6**

**Fig. 7**

**Fig. 8**

**Fig. 9**

**Fig. 10**

Fig. 11(a)

Fig. 11(b)

Fig. 12

**Fig. 13**

Fig. 14(a)

Fig. 14(b)

Fig. 14(c)

Fig. 14(d)

Fig. 14(e)

Fig. 15

Europäisches
Patentamt
European
Patent Office
Office européen
des brevets

**EUROPEAN SEARCH REPORT**

Application Number

EP 23 16 1377

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | K\"OTTIG ET AL: "Efficient single-cycle pulse compression of an ytterbium fiber laser at 10 MHz repetition rate", ARXIV.ORG, CORNELL UNIVERSITY LIBRARY, 201 OLIN LIBRARY CORNELL UNIVERSITY ITHACA, NY 14853, 23 January 2020 (2020-01-23), XP081584458, * figure 1 * * abstract * * chapter 2, first paragraph * ----- | 1-15 | INV. G02F1/35 G02F1/365 |
| A | K\"OTTIG ET AL: "Generation of micro-J pulses in the deep UV at MHz repetition rates", ARXIV.ORG, CORNELL UNIVERSITY LIBRARY, 201 OLIN LIBRARY CORNELL UNIVERSITY ITHACA, NY 14853, 23 May 2017 (2017-05-23), XP081276946, DOI: 10.1364/OPTICA.4.001272 * figure 1a * ----- | 1-15 | |
| A | WANG YAZHOU ET AL: "Ultraviolet to mid-infrared gas-filled anti-resonant hollow-core fiber lasers", PROCEEDINGS OF THE SPIE, SPIE, US, vol. 11773, 18 April 2021 (2021-04-18), pages 1177308-1177308, XP060143096, ISSN: 0277-786X, DOI: 10.1117/12.2592717 * figure 2 * ----- -/-- | 1-15 | TECHNICAL FIELDS SEARCHED (IPC) G02F |

The present search report has been drawn up for all claims

| Place of search | Date of completion of the search | Examiner |
|---|---|---|
| The Hague | 8 August 2023 | Gill, Richard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

Application Number

EP 23 16 1377

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JOHN C TRAVERS ET AL: "High-energy pulse self-compression and ultraviolet generation through soliton dynamics in hollow capillary fibres", ARXIV.ORG, CORNELL UNIVERSITY LIBRARY, 201 OLIN LIBRARY CORNELL UNIVERSITY ITHACA, NY 14853, 14 November 2018 (2018-11-14), XP080944454, * the whole document * | 1-15 | |
| A,D | CN 114 174 909 A (ASML DUTCH CO LTD) 11 March 2022 (2022-03-11) * the whole document * | 1-15 | |

TECHNICAL FIELDS
SEARCHED (IPC)

The present search report has been drawn up for all claims

| Place of search | Date of completion of the search | Examiner |
|---|---|---|
| The Hague | 8 August 2023 | Gill, Richard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 16 1377

This annex lists the patent family members relating to the patent documents cited in the above-mentioned European search report.
The members are as contained in the European Patent Office EDP file on
The European Patent Office is in no way liable for these particulars which are merely given for the purpose of information.

08-08-2023

| Patent document cited in search report | Publication date | Patent family member(s) | | Publication date |
|---|---|---|---|---|
| CN 114174909 A | 11-03-2022 | CN | 114174909 A | 11-03-2022 |
| | | EP | 3770677 A1 | 27-01-2021 |
| | | IL | 289310 A | 01-02-2022 |
| | | JP | 2022542070 A | 29-09-2022 |
| | | KR | 20220024908 A | 03-03-2022 |
| | | TW | 202113494 A | 01-04-2021 |
| | | US | 2021026255 A1 | 28-01-2021 |
| | | US | 2022128910 A1 | 28-04-2022 |
| | | WO | 2021013611 A1 | 28-01-2021 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6952253 B
- US 20100328655 A
- US 2011102753 A1
- US 20120044470 A
- US 20110249244 A
- US 20110026032 A
- EP 1628164 A
- US 451599
- US 11708678 B
- US 12256780 B
- US 12486449 B
- US 12920968 B
- US 12922587 B
- US 13000229 B
- US 13033135 B
- US 13533110 B
- US 13891410 B
- WO 2011012624 A
- US 20160161863 A
- US 20160370717 A
- US 20160370717 A1
- US 7265364 B
- US 7646471 B
- US 2010233600 A1
- WO 2016102127 A1
- US 6961116 B
- US 2015261097 A1
- US 2004015085 A1
- WO 2017032454 A1
- WO 2018127266 A1
- US 9160137 B1
- EP 3796080 A1, P. Uebel, S. Bauerschmidt, Y. Ni

### Non-patent literature cited in the description

- **A. ZHELTIKOV.** Analytical insights into self-phase modulation: beyond the basic theory. *Opt. Express,* 2018, vol. 26, 17571
- **J. M. DUDLEY et al.** Supercontinuum generation in photonic crystal fiber. *Rev. Mod. Phys.,* 2006, vol. 78, 1135
- **M. H. FROSZ et al.** Analyical formulation for the bend loss in single-ring hollow-core photonic crystal fibers. *Photonics Res.,* 2017, vol. 5, 88-91
- **R. M. CARTER et al.** Measurement of resonant bend loss in anti-resonant hollow core optical fiber. *Opt. Express,* 2017, vol. 25, 20612